# EUROPEAN PATENT SPECIFICATION

(11) **EP 2 418 536 B1**
(45) Date of publication and mention of the grant of the patent: **17.09.2014**
(21) Application number: 09843070.5
(22) Date of filing: 18.11.2009
(51) Int. Cl.: G02F 1/1337, C08F 2/46, C08F 20/00

(54) **LIQUID CRYSTAL DISPLAY DEVICE and COMPOSITION FOR FORMING a POLYMER LAYER**
FLÜSSIGKRISTALLANZEIGEANORDNUNG und ZUSAMMENSETZUNG ZUR BILDUNG EINER POLYMERSCHICHT
DISPOSITIF D'AFFICHAGE DE CRISTAUX LIQUIDES et COMPOSITION POUR LA FORMATION D'UNE COUCHE POLYMÈRE

(30) Priority: 06.04.2009 JP 2009092146; 10.09.2009 JP 2009209690
(43) Date of publication of application: 15.02.2012
(73) Proprietor: Sharp Kabushiki Kaisha, Osaka-shi, Osaka 545-8522 (JP)
(72) Inventor: MIZUSAKI, Masanobu, Osaka 545-8522 (JP); NAKANISHI, Yohei, Osaka 545-8522 (JP); KATAYAMA, Takashi, Osaka 545-8522 (JP); KAWAHIRA, Yuichi, Osaka 545-8522 (JP)
(74) Representative: Müller - Hoffmann & Partner
(86) International application number: PCT/JP2009/069565
(87) International publication number: WO 2010/116564

(56) References cited:
- JP-A- 10 227 998
- JP-A- 11 109 393
- JP-A- 2003 228 050
- JP-A- 2005 338 613
- JP-A- 2008 076 950
- JP-A- 2009 104 119
- US-A1- 2003 151 703
- GUO M ET AL: "Polyimides with main-chain photosensitive groups: Synthesis, characterization and their properties as liquid crystal alignment layers", EUROPEAN POLYMER JOURNAL, PERGAMON PRESS LTD. OXFORD, GB, vol. 45, no. 3, 1 March 2009 (2009-03-01), pages 888-898, XP025960962, ISSN: 0014-3057, DOI: 10.1016/J.EURPOLYMJ.2008.11.038 [retrieved on 2008-12-06]
- OTSU T ET AL: "ROLE OF INITIATOR-TRANSFER AGENT-TERMINATOR (INIFERTER) IN RADICAL POLYMERIZATIONS: POLYMER DESIGN BY ORGANIC DISULFIDES AS INIFERTERS", MAKROMOLEKULARE CHEMIE, RAPID COMMUNICATIONS, HUTHIG UND WEPF VERLAG. BASEL, CH, vol. 3, 1 January 1982 (1982-01-01), pages 127-132, XP002929292, DOI: 10.1002/MARC.1982.030030208

## Description

### TECHNICAL FIELD

The present invention relates to a liquid crystal display device, a method for producing a liquid crystal display device, a composition for a polymer layer, and a composition for a liquid crystal layer. More specifically, the present invention relates to a liquid crystal display device having a polymer layer formed on an alignment film; a method for producing the liquid crystal display device; a composition for a polymer layer which is suitable for polymer layer formation; and a composition for a liquid crystal layer.

### BACKGROUND ART

Liquid crystal displays (LCDs) are display devices that control transmission/reflection of light (ON/OFF of display) by controlling the alignment of birefringent liquid crystal molecules. The LCDs may employ a display mode such as a vertical alignment (VA) mode in which liquid crystal molecules having negative dielectric anisotropy are aligned vertically to the substrate surface; or an in-plane switching (IPS) mode in which liquid crystal molecules having positive dielectric anisotropy are aligned horizontally to the substrate surface, and a horizontal electric field is applied to the liquid crystal layer.

Particularly in the multi-domain vertical alignment (MVA) mode which employs liquid crystal molecules having negative dielectric anisotropy and has banks (linear protrusions) and electrode-free parts (slits) as components for alignment control, the liquid crystal molecules can be controlled in a plurality of alignment directions while a voltage is applied even without a rubbing treatment on the alignment film, and has excellent viewing angle characteristics. Those conventional MVA-LCDs still can be improved in that they have low transmittance in the white display because of the protrusions and slits of which the upper sides define the boundaries of alignment division of liquid crystal molecules, and the boundaries appear as dark lines in the display.

Patent Documents 1 and 2, for example, suggest a pretilt-angle providing technique using a polymer, as a method for obtaining an LCD having high brightness and being highly responsive. The pretilt-angle providing technique using a polymer includes injecting between substrates a liquid crystal composition containing polymerizable components such as polymerizable monomers and polymerizable oligomers, and then polymerizing the monomers while applying a voltage between the substrates to tilt (incline) the liquid crystal molecules so as to form a polymer. This enables to obtain liquid crystal molecules tilted at predetermined pretilt angles even after removal of the applied voltage and thus to align the liquid crystal molecules in certain directions. The monomers used are selected from materials polymerizable by heat, light (ultraviolet light) or the like. In some cases, the liquid crystal composition contains a polymerization initiator for triggering a polymerization reaction of the monomers.
Patent Document 1: JP 2003-177418 A
Patent Document 2: JP 2004-286984 A

US 2003/0151703 A1 discloses a liquid crystal display in which a polymeric component included in a liquid crystal layer is polymerized while adjusting a voltage applied to the liquid crystal layer to regulate the direction of alignment of liquid crystal molecules during polymerization. A liquid crystal display is provided in which image sticking is mitigated. This document discloses the features of the preamble of claim 1.

Otsu T. et al. In Mackromolekulare Chemie, Rapid Communications, vol 3, pages 127-132, 1982, discloses the initiator reaction and discloses the features of the preamble of claim 8.

### SUMMARY OF THE INVENTION

### PROBLEMS TO BE SOLVED BY THE INVENTION

The present inventors, however, have found as a result of their studies that a liquid crystal display device sometimes shows image sticking and can therefore be further improved, even if the display device is produced by injecting a liquid crystal layer composition, which contains a liquid crystal material, a polymerizable monomer and a polymerization initiator, between a pair of substrates, and then causing a polymerization reaction under predetermined conditions so as to form a polymer layer on the alignment film. This has been achieved by the subject-matter of the independent claims.

The present invention has been made in view of the above state of the art, and aims to provide a liquid crystal display device capable of reducing the probability of image sticking.

### MEANS FOR SOLVING THE PROBLEMS

After the studies on the causes of image sticking in liquid crystal display devices, the present inventors have focused on the components contained in the liquid crystal layer after the polymerization reaction. As a result, the inventors have found that unreacted monomers and a polymerization initiator remain in the liquid crystal layer even after completion of the series of polymerization reactions. The inventors have also found that the unreacted monomers remaining in the liquid crystal layer are gradually polymerized by light from the backlight during the general use of the completed display device or in the aging process for checking after the assembling process. Such polymerization happens to change the pretilt angle, and the change causes image sticking in liquid crystal display.

The present inventors have further made studies and have found that the above problem of image sticking can be solved by adjusting the concentration of the polymerization initiator in the liquid crystal layer if the cause of image sticking is a change in the pretilt angle. Thereby, the present invention has been completed.

That is, the present invention is a liquid crystal display device according to claim 1. The control mode for the liquid crystal layer in the liquid crystal display device of the present invention may be any control mode such as the twisted nematic (TN) mode, the VA mode, and the IPS mode. Further, in the MVA mode in which one or both of the substrates has/have dielectric components (e.g. protrusions) for alignment control and/or slits in the electrodes or in the 4 domain reverse TN (4D-RTN) mode, a wide viewing angle can be provided.

For example, one of the substrates in the liquid crystal display device of the present invention serves as an array substrate and the other serves as a color filter substrate. The array substrate includes a plurality of pixel electrodes and these electrodes control the alignment of liquid crystal molecules in each pixel. In the color filter substrate, a set of color filters such as an R (red) filter, a G (green) filter and a B (blue) filter is provided at each position in one-to-one correspondence with the pixel electrodes on the array substrate, enabling control of a color to be displayed for each pixel.

At least one of the substrates in the liquid crystal display device of the present invention includes an alignment film. The term "alignment film" herein means a film for aligning liquid crystal molecules in the vicinity thereof in predetermined directions, and is intended to include both of films subjected to an alignment treatment and films not subjected to any alignment treatment. Examples of the alignment film include resin films. The alignment film may be, for example, a resin film formed from a common vertical alignment film material without performing any alignment treatment, or a resin film formed from a common horizontal alignment film material without performing any alignment treatment. In the case of performing an alignment treatment, a rubbing treatment or a photo-alignment treatment may be performed as the alignment treatment.

At least one of the substrates in the liquid crystal display device of the present invention includes a polymer layer on the alignment film. The polymer layer is formed by a polymerization reaction of a polymerizable monomer triggered by a polymerization initiator existing at a concentration of 1 mol% or lower relative to the polymerizable monomer. The concentration of the polymerization initiator is preferably 0.1 mol% or lower, and more preferably 0.01 mol% or lower relative to the polymerizable monomer. Still, zero amount of the polymerization initiator leads to an insufficient polymerization reaction. In this case, the pretilt angle is changed by the the remaining unpolymerized monomers, or by the elastic energy of liquid crystals owing to the insufficient cross-linking density. Such a change in the pretilt angle tends to cause image sticking in the display. In other words, since the polymer layer provided in the liquid crystal display device of the present invention contains polymers formed by a polymerization reaction triggered by a polymerization initiator, image sticking due to a change in the pretilt angle owning to the remaining unpolymerized monomers is suppressed, and a sufficient polymerization reaction can be obtained which gives a polymer layer having a high cross-linking density. The polymer layer therefore suppresses image sticking due to a change in the pretilt angle caused by the external stress. Examples of the polymerizable monomers include polymerizable monomers that polymerize when exposed to light, and polymerizable monomers that polymerize when heated. As a result of such a polymerization reaction, a polymer layer is formed. Examples of the polymerization initiator include radical polymerization initiators, and examples of the polymerization include radical polymerization.

The polymer layer enables the alignment film to regularly align liquid crystal molecules in the vicinity of the alignment film in predetermined directions even if any alignment treatment is not performed. For example, in the case where the polymer layer is formed by polymerizing monomers in a state that liquid crystal molecules are pretilted, the polymer layer pretilts liquid crystal molecules, whether or not the alignment film is subjected to an alignment treatment.

The structure of the liquid crystal display device of the present invention is not particularly limited as long as the device includes the above essential components, and any other components may be included.

The polymer layer is preferably formed by light irradiation, the polymerizable monomer is preferably polymerized by light irradiation, the polymerization initiator is preferably a radical polymerization initiator, and the polymerization is preferably radical polymerization by light irradiation. In such a case, polymerization is easily initiated at normal temperature.

The radical polymerization includes three elementary reactions of initiation, propagation, and termination, generally illustrated by the following radical polymerization reaction mechanisms.

**I₂→2I•** (Initiation reaction)

I• + M→IM• (Propagation reaction)

I-(M)ₙ₋₁-M• + 1-(M)ₘ₋₁-M•→1-(M)ₙ₊ₘ-1 (Termination reaction)

In the reaction formulae, I represents a radical polymerization initiator, and M represents a polymerizable monomer.

If the polymerization initiator is a radical polymerization initiator, the radical polymerization initiator preferably has a function of terminating the radical polymerization. Addition of a radical polymerization initiator in the liquid crystal layer greatly increases the reaction rate of the radical polymerization reaction, which leads to less residual unreacted monomers, and thus suppresses image sticking caused by a change in the pretilt angle. However, in the case that the monomers in the liquid crystal layer are polymerized by radical polymerization triggered by a radical polymerization initiator, the polymer to be formed may have radicals at the ends thereof, and the radicals can be a cause of a residual DC voltage in the alignment film and the polymer layer.

If the radical polymerization initiator can trigger an initiation reaction by bonding to the monomers and also can terminate the radical polymerization reaction by bonding to an end of the polymer, then the initiator can reduce residual radicals in the polymer constituting the polymer layer, and reduce the residual DC voltage accumulated in the alignment film and the polymer layer. As a result, image sticking generation caused by a residual DC voltage can be suppressed.

The molecular weight distribution of the polymer constituting the polymer layer is preferably 8 or less. Here, the term "molecular weight distribution" is defined as (weight average molecular weight) / (number average molecular weight) of a polymer. A molecular weight distribution of a polymer of 8 or less indicates sufficient progression of the polymerization, which suppresses image sticking caused by a change in the pretilt angle. The molecular weight distribution can be measured using gel permeation chromatography (GPC), for example. In the case of forming a polymer layer that contains a polymer having a molecular weight distribution of 8 or less, the polymerization initiator is preferably a radical polymerization initiator, and the polymerization is preferably radical polymerization.

The radical polymerization initiator preferably includes a chemical structure represented by formula (1): 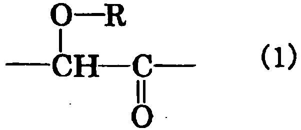 wherein R represents H, CₙH₂ₙ₊₁ or CₙH₂ₙCF₃, and n is an integer of 1 to 18. The radical polymerization preferably includes a chemical reaction represented by formula (2): 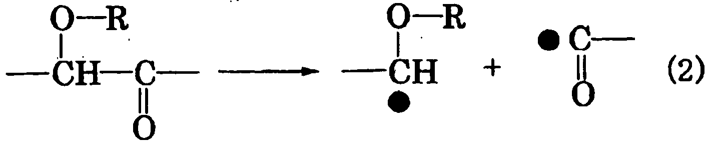 wherein R represents H, CₙH₂ₙ₊₁ or CₙH₂ₙCF₃, and n is an integer of 1 to 18; and the chemical reaction is preferably caused by ultraviolet light irradiation to produce radicals that initiate the polymerization.

Some examples of the radical polymerization initiator are shown below: compounds represented by formulae (3-1) to (3-8): 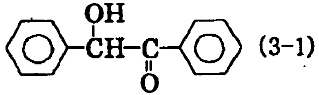 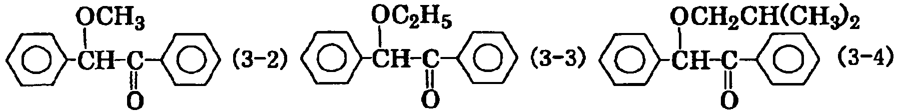 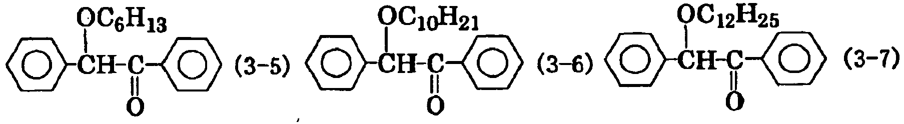 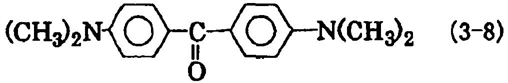 and compounds represented by formulae (4-1) to (4-3):

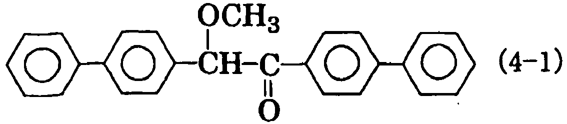

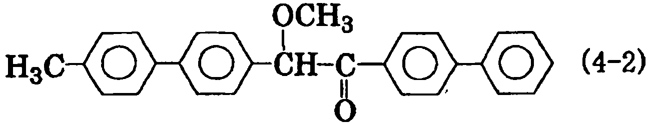

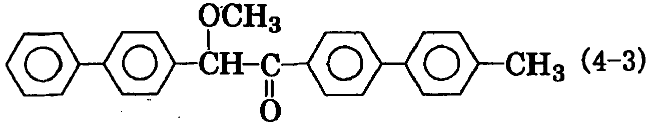

The radical polymerization initiator preferably includes at least one compound selected from the group consisting of the above compounds.

The radical polymerization initiator preferably includes two compounds, one of the compounds represented by formula (5) : 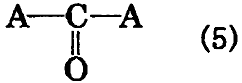 wherein A represents an aromatic compound, and the other one represented by formula (6): 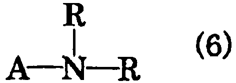 wherein R represents CₙH₂ₙ₊₁, n is an integer of 1 to 18, and A represents an aromatic compound; the radical polymerization preferably includes a chemical reaction represented by formula (7): 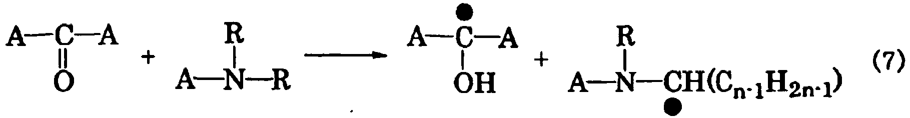 wherein R represents CₙH₂ₙ₊₁, n is an integer of 1 to 18, and A represents an aromatic compound; and the chemical reaction is preferably caused by ultraviolet light irradiation to produce radicals that initiate the polymerization.

The following formula (8) shows a chemical reaction:

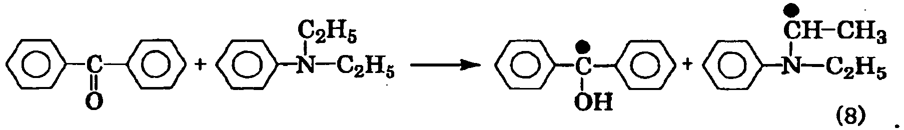

The radical polymerization preferably includes the above chemical reaction.

The following formula (9) represents a chemical structure:

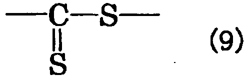

The radical polymerization initiator preferably includes the above chemical structure.

Examples of the radical polymerization initiator further include the following compounds: compounds represented by formulae (10-1) to (10-17): 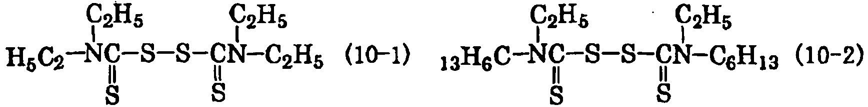 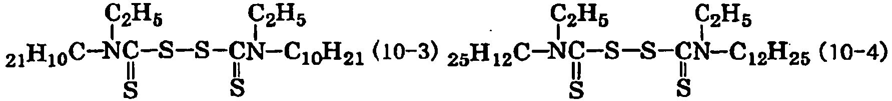 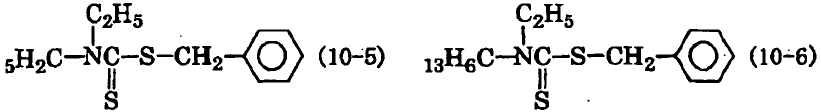 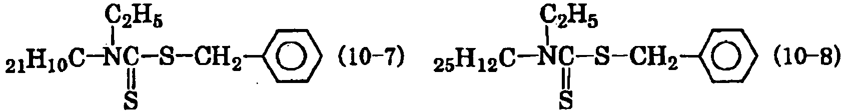 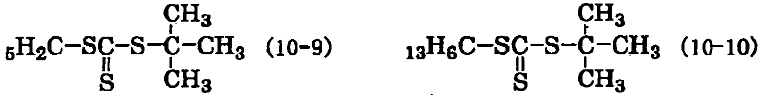 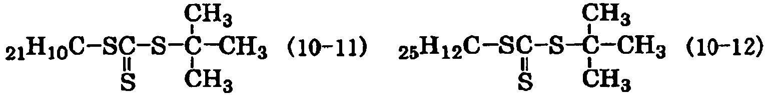 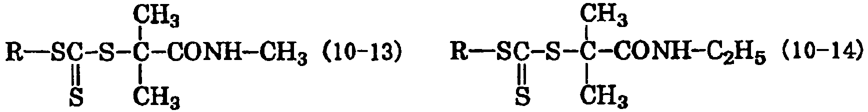 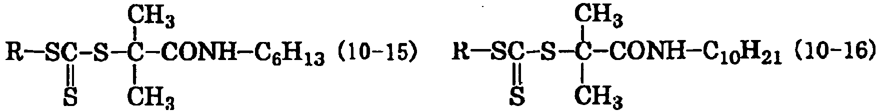 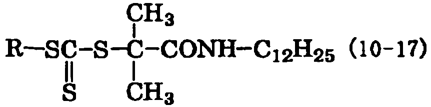 wherein R represents CH₃, C₂H₅, C₆H₁₃, C₁₀H₂₁, or C₁₂H₂₅, and compounds represented by formulae (11-1) to (11-3):

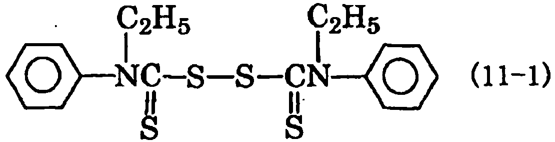

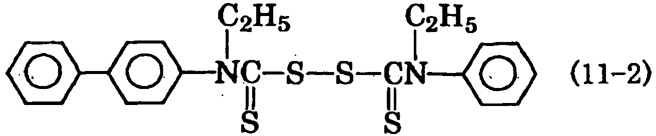

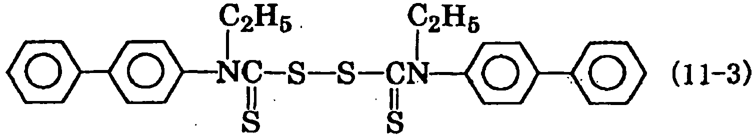

The radical polymerization initiator preferably includes at least one compound selected from the group consisting of the above compounds.

Preferably, each of the substrates has an electrode, and the polymer layer is preferably formed by polymerization of polymerizable monomers while a voltage not lower than a threshold voltage is applied to the liquid crystal layer through the electrodes. If the polymer layer is formed by polymerization while a voltage not lower than a threshold voltage is applied to the liquid crystal layer, i.e., while the inclination of the liquid crystal molecules in the liquid crystal layer is changed from that in a state where no voltage is applied, then the surface of the polymer layer has a shape corresponding to the changed inclination. As a result, the pretilt alignment of liquid crystal molecules is more stabilized, and the time required for a change in the angles of all the liquid crystal molecules after the voltage application is shortened, i.e., the response speed is improved.

The alignment film preferably contains a material that includes a compound comprising a photoactive functional group. That is, the alignment film is preferably a photo-alignment film containing a material that aligns liquid crystal molecules upon being irradiated with light. In this case, the 4D-RTN mode that can control inclination of liquid crystal molecules in four different alignment directions in every pixel is easily achieved since the alignment given by a photo-alignment treatment, which is a non-contact treatment, can be controlled by the radiation angle, wavelength and intensity of light, and other factors.

The photoactive functional group is preferably a cinnamate group, chalcone group, tolane group, coumarin group, or azobenzene group. These photoactive functional groups can be comparatively easily introduced into a side chain of the polymer and are highly reactive.

The alignment film preferably comprises a copolymer that contains a monomer unit comprising a side chain containing a photoactive functional group and a monomer unit comprising a side chain free from photoactive functional groups.

The alignment film preferably vertically aligns liquid crystal molecules in the liquid crystal layer while no voltage is applied. In the case where the liquid crystal display device is in a mode in which liquid crystal molecules have negative dielectric anisotropy (e.g. VA mode, MVA mode), the alignment film configured as described above can improve the response speed.

The alignment film preferably tilts the liquid crystal molecules in the liquid crystal layer in a direction oblique to the normal direction of the alignment film surface while no voltage is applied. Such an alignment film can be prepared by performing an alignment treatment such as a rubbing treatment or a photo-alignment treatment on a common resin material, a vertical alignment film material or a horizontal alignment film material. If a polymer layer is formed on such an alignment film, the polymer layer serves to further enhance the alignment control ability of the alignment film, resulting in lower probability of image sticking. In addition, it is unnecessary to apply a voltage not lower than a threshold voltage to the liquid crystal layer during the polymerization step. Namely, even in the case where the polymerization step is performed while no voltage is applied, this structure makes it possible to achieve an identical image-sticking prevention effect to that achieved in the case where the polymerization step is performed while a voltage not lower than a threshold voltage is applied to the liquid crystal layer.

Preferably, the liquid crystal display device includes a plurality of pixels, wherein the liquid crystal layer is divided into regions that are in one-to-one correspondence with the pixels, and each of the regions of the liquid crystal layer is divided into a plurality of subregions whose alignment directions of liquid crystal molecules are different from one another. The structure in which each pixel region has a plurality of subregions whose alignment directions of liquid crystal molecules are different provides a display that appears the same even when viewed from different angles. In this way, the viewing angle characteristics are improved. Such an alignment-divided structure can be achieved, for example, by forming linear bank-like protrusions made of a dielectric material on electrodes or forming linear slits in the electrodes, or by changing the radiation angle of light in the process of forming a photo-alignment film, so that the resulting alignment film has different pretilt angles.

Preferably, the number of the subregions is four. These four subregions provide an improved display even when the viewing angle is inclined to any directions: up, down, left and right relative to the normal line of the display screen, that is, the viewing angle characteristic is improved in a balanced manner.

The following method is suitable as the method for producing a liquid crystal display device according to the present invention which includes forming a polymer layer on an alignment film. That is, the suitable method is a method for producing a liquid crystal display device comprising a pair of substrates and a liquid crystal layer between the substrates. The method comprises the steps of: forming an alignment film on at least one of the substrates; and forming a polymer layer on the alignment film by radical polymerization of a polymerizable monomer triggered by a radical polymerization initiator existing at 1 mol% or lower relative to the polymerizable monomer.

Since the proportion of the radical polymerization initiator relative to the monomer in the production method is adjusted to 1 mol% or lower, the method can suppress residual unreacted monomers and provide a polymer layer having high cross-linking density compared to the case of not using radical polymerization initiators at all. Hence, the method can prevent image sticking caused by a change in the pretilt angle. Also, the small proportion of the radical polymerization initiator can result in reduction of the residual DC voltage caused by remaining radicals. The method therefore can prevent image sticking caused by residual DC voltage as well.

The radical polymerization initiator used in the above production method preferably has a function of terminating the polymerization. If the radical polymerization initiator has such a function of terminating the polymerization reaction by bonding to the ends of polymers, then radicals in the polymers constituting the alignment film and the polymer layer are reduced. The initiator therefore can suppress accumulation of residual DC voltage in alignment films and polymer layers, and prevent image sticking caused by the residual DC voltage.

The step of forming a polymer layer in the production method is preferably a step of forming a polymer layer by polymerizing a polymerizable monomer while a voltage not lower than a threshold voltage is applied to the liquid crystal layer. As a result, the pretilt alignment of liquid crystal molecules is more stabilized, and the time required for a change in the angles of all the liquid crystal molecules after the voltage application is shortened, i.e., the response speed is improved.

The step of forming an alignment film in the production method preferably includes the step of an alignment treatment by light irradiation. The step of an alignment treatment by light irradiation can reduce the probability of damage to components below the alignment film (e.g. TFTs), compared to contact treatments such as rubbing. Also, this alignment treatment facilitates production of 4D-RTN displays that can control inclination of liquid crystal molecules in four different alignment directions in every pixel because the alignment given by a photo-alignment treatment can be controlled by the radiation angle, wavelength and intensity of light, and other factors. Accordingly, a wide viewing angle is comparatively easily achieved.

Another example of the method for producing a liquid crystal display device according to the present invention is a method for producing a liquid crystal display device comprising a pair of substrates and a liquid crystal layer between the substrates, the method comprising the steps of: forming an alignment film on at least one of the substrates; and forming a polymer layer by polymerization starting from an initiation reaction triggered by a polymerization initiator, on the alignment film, wherein the molecular weight distribution of the polymer constituting the polymer layer is 8 or less. As above, a molecular weight distribution of a polymer of 8 or less indicates sufficient progression of the polymerization, which suppresses image sticking caused by a change in the pretilt angle.

The production method preferably further comprises the step of dissolving a monomer and a polymerization initiator at a concentration of 1 mol% or lower relative to the monomer in a liquid crystal material before the step of forming a polymer layer. As above, such a concentration enables suppression of residual unreacted monomers and provision of a polymer layer having high cross-linking density compared to the case of not using radical polymerization initiators at all. Hence, the method can prevent image sticking caused by a change in the pretilt angle.

The production method preferably further comprises the step of forming a polymer layer comprises forming a polymer layer on a vertical-alignment film by a polymerization reaction triggered by a polymerization initiator while applying a voltage not lower than a threshold voltage to the liquid crystal layer. As a result, the pretilt alignment of liquid crystal molecules is more stabilized, and the time required for a change in the angles of all the liquid crystal molecules after the voltage application is shortened, i.e., the response speed is improved particularly in a mode in which liquid crystal molecules have negative dielectric anisotropy (e.g. VA mode, MVA mode).

The production method preferably further comprises the step of an alignment treatment by irradiating with light the alignment film containing a material that includes a compound comprising a photoactive functional group. In this case, the 4D-RTN mode that can control inclination of liquid crystal molecules in four different alignment directions in every pixel is easily achieved because the alignment given by a photo-alignment treatment can be controlled by the radiation angle, wavelength and intensity of light, and other factors.

The photoactive functional group is preferably a cinnamate group, chalcone group, tolane group, coumarin group, or azobenzene group. These photoactive functional groups can be comparatively easily introduced into a side chain of the polymer and are highly reactive.

The alignment film preferably comprises a copolymer that contains a monomer unit comprising a side chain containing the photoactive functional group and a monomer unit comprising a side chain free from photoactive functional groups.

The present invention also relates to a composition for a polymer layer according to claim 8. The proportion of the polymerization initiator is preferably 0.1 mol% or lower, and more preferably 0.01 mol% or lower, relative to the polymerizable monomer. Suppose that the composition for a polymer layer according to the present invention has such a low concentration of the polymerization initiator relative to the polymerizable monomer and is used to form, for example, a polymer layer on an alignment film of a liquid crystal display device. In this case, the low concentration enables suppression of residual unpolymerized monomers and provision of a polymer layer having high cross-linking density, whereby a polymer layer can be obtained in which the pretilt angle hardly changes after completion of the reaction. Accordingly, a liquid crystal display device showing a high response speed and hardly causing image sticking can be obtained.

The formulation of the composition for a polymer layer according to the present invention is not particularly limited as long as the composition includes the above essential materials, and any other materials may be included. Examples of the above composition for a polymer layer include compositions that can be formed into polymer layers by light irradiation.

The polymerizable monomer is preferably polymerized by light irradiation, and the polymerization initiator is preferably a radical polymerization initiator. In such a case, polymerization is easily initiated at normal temperature.

The polymerization initiator has a function of terminating the polymerization. As above, if the radical polymerization initiator has such a function of terminating the polymerization reaction by bonding to the ends of polymers, then radicals in the polymers constituting the alignment film and the polymer layer are reduced. The initiator therefore can suppress accumulation of residual DC voltage in alignment films and polymer layers, and prevent image sticking caused by the residual DC voltage. Accordingly, if, for example, a polymer layer is produced from the composition for a polymer layer in the above form on the alignment film of the liquid crystal display device, then image sticking caused by residual DC voltage can be suppressed.

The composition for a polymer layer according to the present invention, when contained in a liquid crystal material, enables to form a polymer layer efficiently by polymerizing monomers while a voltage not lower than a threshold voltage is applied to a liquid crystal layer. That is, the present invention also relates to a composition for a liquid crystal layer which contains the composition for a polymer layer and a liquid crystal material.

### EFFECT OF THE INVENTION

The liquid crystal display device of the present invention reduces the probability of image sticking because a polymer layer containing a radical polymerization initiator existing at a low concentration relative to the monomer is formed on an alignment film.

### BRIEF DESCRIPTION OF DRAWINGS

[Fig. 1]

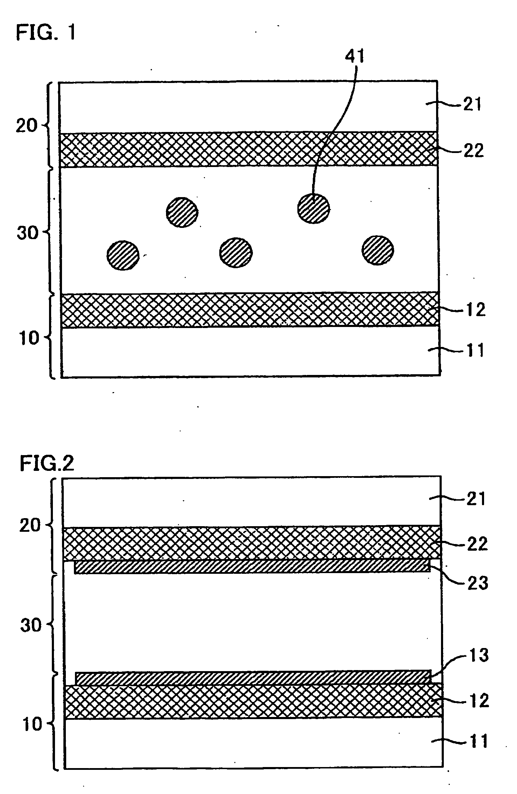

   Fig. 1 is a schematic cross-sectional view of a liquid crystal display device before a PSA polymerization step.
[Fig. 2]
   Fig. 2 is a schematic cross-sectional view of a liquid crystal display device after the PSA polymerization step.

### MODE(S) FOR CARRYING OUT THE INVENTION

Hereinafter, the present invention is described in more detail by way of embodiments referring to drawings, but the invention is not limited to these embodiments.
Only the third embodiment is according to the claimed invention, whereas the first and second embodiments are examples which are useful for understanding the invention.

### First embodiment

The first embodiment is an example of the liquid crystal display device of the present invention which includes the composition for a polymer layer and the composition for a liquid crystal layer according to the present invention. The liquid crystal display device according to the first embodiment is provided with a polymer layer formed by radical polymerization of polymerizable monomers by light irradiation, on an alignment film. The alignment of liquid crystals is controlled by such a polymer layer. Hereinafter, a polymer layer formed on an alignment film as above is also referred to as a polymer sustained alignment (PSA) layer.

In the first embodiment, the reaction of the radical polymerization is triggered by a radical polymerization initiator. The composition (composition for a liquid crystal layer) used to form a liquid crystal layer in the first embodiment contains a composition (composition for a polymer layer) containing a polymerization monomer and a radical polymerization initiator as well as a liquid crystal material. The concentration of the radical polymerization initiator relative to the polymerizable monomer is adjusted to 1 mol% or lower.

The reaction speed of the polymerization reaction does not increase without a radical polymerization initiator, and the probability of unreacted monomer remaining in the liquid crystal layer increases. The unreacted monomers remaining in the liquid crystal layer are gradually polymerized by light from the backlight during the general use of the completed display device, or are gradually polymerized in the aging process for checking after the assembling process. Such polymerization happens to change the pretilt angle, and thus causes image sticking in the display. Also, insufficient polymerization reaction leads to a PSA layer having a low cross-linking density, and the pretilt angle in such a PSA layer is easily changed by the elastic energy of liquid crystal molecules. Such a change in the pretilt angle tends to cause image sticking in display.

Meanwhile, if, for example, the concentration of the radical polymerization initiator relative to the polymerizable monomer is as high as 2 mol% or higher and not all the radical polymerization initiator is used in the radical polymerization reaction, then the DC voltage tends to remain in the alignment film and the PSA layer by the radical moieties of the radical polymerization initiator. The residual DC voltage in the alignment film and the PSA layer tends to cause image sticking in the display.

In the first embodiment, the concentration of the radical polymerization initiator is controlled to be low. Therefore, both image sticking caused by a change in the pretilt angle and image sticking caused by the residual DC voltage can be suppressed. A radical polymerization initiator existing at a low concentration still triggers the polymerization reaction and increases the reaction speed, leading to an increase in the throughput.

The light irradiation for triggering the radical polymerization reaction in the first embodiment is preferably performed while a voltage not lower than a threshold voltage is applied to the liquid crystal layer. In this case, the surface of the PSA layer has a shape corresponding to the inclination of the liquid crystal molecules changed by the voltage application. As a result, the pretilt alignment of liquid crystal molecules is more stabilized, and the time required for a change in the angles of all the liquid crystal molecules after the voltage application is shortened, i.e., the response speed is improved.

In the first embodiment, the polymerizable monomer used can be one represented by the following formula (I):

P¹-S¹-A¹-(Z¹-A²)ₙ-S²-P² (I)

wherein P¹ and P², which are the same or different, each represent an acrylate group, methacrylate group, acrylamide group, methacrylamide group, vinyl group, vinyloxy group, or epoxy group; A¹ and A² each represent a 1,4-phenylene group, naphthalene-2,6-diyl group, anthracene-2,6-diyl group or phenanthrene-2,6-diyl group; Z¹ represents COO, OCO, O, or a direct bond between A¹ and A², or A² and A²; n is 0, 1, or 2; S¹ and S², which are the same or different, each represent -(CH₂)ₘ- (0 s m ≤ 6), (CH₂-CH₂-O)ₘ- (0 s m s 6) or a direct bond between P¹ and A¹, A¹ and P², or A² and P²; and all or part of hydrogen atoms of A¹ and A² may be substituted with halogens and/or methyl groups.

Examples of the radical polymerization initiator that can be used in the first embodiment include compounds represented by the following formulae (3-1) to (3-8):

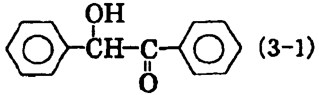

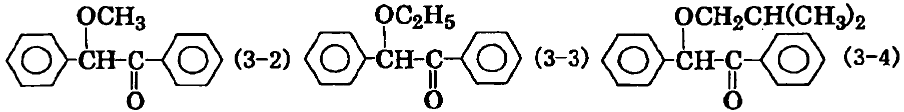

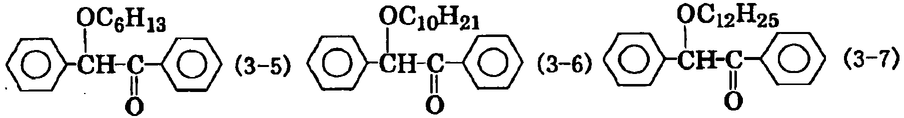

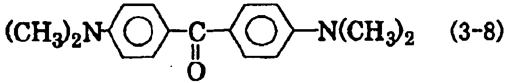

The two compounds used in the following formula (8) may also be used as the radical polymerization initiator in the first embodiment 1.

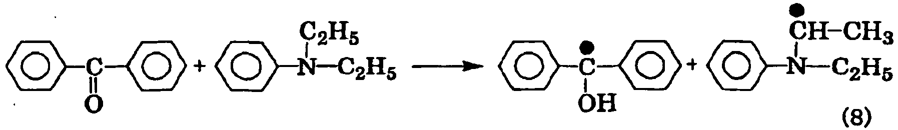

The compounds represented by formulae (3-1) to (3-8) and the compounds used in formula (8) are ones that do not generate gas such as carbon dioxide (CO₂) when a radical polymerization is initiated. Hence, such compounds are very suitable as the radical polymerization initiator used in the first embodiment in terms of suppression of image sticking. The relation between generation of gas and image sticking will be described in the following Example 1.

Examples of the radical polymerization initiator having higher solubility in the liquid crystal layer in the first embodiment include the compounds represented by the following formulae (4-1) to (4-3):

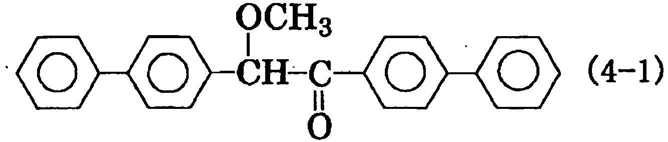

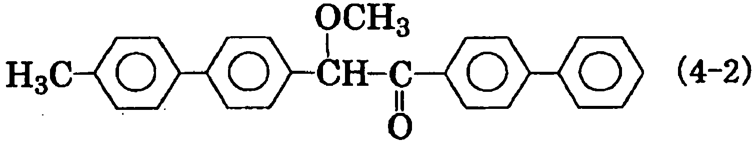

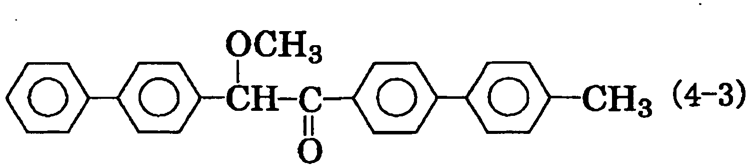

Each of the compounds represented by formulae (4-1) to (4-3) has a 1,4-phenylene group at one or both ends thereof which is/are the polymerization starting point(s), and thus the compounds have high solubility to the liquid crystal material. A radical polymerization initiator having high solubility to the liquid crystal material is more efficiently used in the reaction. The reaction speed of the polymerization is therefore further increased, and the probability of unreacted monomer remaining is further reduced.

Hereinafter, the liquid crystal display device according to the first embodiment is described in detail. Fig. 1 and Fig. 2 are schematic cross-sectional views of the liquid crystal display device according to the first embodiment. Fig. 1 illustrates the device before a PSA polymerization step and Fig. 2 illustrates the device after the PSA polymerization step. As shown in Figs. 1 and 2, the liquid crystal display device according to the first embodiment includes a pair of substrates (i.e. an array substrate 10 and a color filter substrate 20), and a liquid crystal layer 30 between the array substrate 10 and the color filter substrate 20. The array substrate 10 includes a supporting substrate 11 which includes an insulating transparent substrate such as a glass substrate. The supporting substrate 11 includes wiring of various types, pixel electrodes, TFTs and the like on the transparent substrate. The color filter substrate 20 includes a supporting substrate 21 which includes an insulating transparent substrate such as a glass substrate. The supporting substrate 21 includes color filters, a black matrix, and a common electrode and the like on the transparent substrate.

The array substrate 10 includes an alignment film 12 on the supporting substrate 11, and the color filter substrate 20 includes an alignment film 22 on the supporting substrate 21. The alignment films 12 and 22 are mainly made of a polyimide, polyamide, polyvinyl, polysiloxane, or the like. Formation of an alignment film enables to incline liquid crystal molecules in predetermined pretilt directions (initial tilts) while no voltage is applied. If the liquid crystal display is in a VA mode, the alignment films 12 and 22 are preferably vertical alignment films each providing a pretilt angle of 80° or more.

The materials of the alignment films 12 and 22 may contain monomers. The alignment film containing a polymer formed from monomers makes the pretilt angles uniform after energization. For example, an alignment film providing more stable alignment can be obtained by forming an alignment film from a material containing 5 to 20 mol% of the polymerizable monomer represented by formula (I) relative to the monomer constituting the alignment film.

The liquid crystal display device according to the first embodiment has slits each of which has a linear shape when viewed from the normal direction of the supporting substrate surfaces. The slits are formed in the pixel electrodes in the supporting substrate 11 and/or in the common electrode in the supporting substrate 12.

When linear slits are formed in the pixel electrodes and/or the common electrode, an electric field is generated in a direction oblique to the normal direction of the substrates while a voltage is applied. Hence, application of a voltage not lower than a threshold voltage to the liquid crystal layer 30 inclines the liquid crystal molecules to the slits. Therefore, the radical polymerization reaction triggered by light irradiation enables to form a PSA layer that functions as an alignment film giving pretilt alignment to the liquid crystal molecules.

Instead of the linear slits in the pixel electrodes and/or the common electrode, dielectric protrusions having a linear shape when viewed from the normal direction of the supporting substrates may be formed on the pixel electrodes and/or the common electrode. In this case, liquid crystal molecules are tilted to the dielectric protrusions while no voltage is applied. Therefore, the radical polymerization reaction triggered by light irradiation enables to form a PSA layer that functions as an alignment film giving pretilt alignment to the liquid crystal molecules, even while a voltage not lower than a threshold voltage is not applied to the liquid crystal layer 30. Examples of the material of the dielectric protrusions include resist resins such as polyimide and novolak.

The liquid crystal display device according to the first embodiment may have both linear slits in the pixel electrodes and/or the common electrode, and dielectric protrusions on the pixel electrodes and/or the common electrode. The liquid crystal display device preferably has only linear slits without dielectric protrusions in terms of an increase in the transmittance, and an increase in the throughput and reduction of the cost which are achieved by eliminating the step of forming dielectric protrusions.

The slits and/or dielectric protrusions are preferably arranged to extend in a direction oblique (about 45° or 135°) to the respective sides of pixel electrodes. Preferably, the slits and/or the dielectric protrusions have curved portions to form a U shape, V shape, W shape, or shape formed by a combination of these shapes when viewed from the normal direction of the substrate surfaces, in terms of widening the viewing angle.

As illustrated in Fig. 1, the liquid crystal layer 30 has polymerizable monomers 41 before the PSA polymerization step. Polymerization of the polymerizable monomers 41 starts with the PSA polymerization step by which the monomers form PSA layers 13 and 23 respectively on the alignment films 12 and 22 as illustrated in Fig. 2. The PSA layers enhance the alignment controlling ability of the alignment films 12 and 22. However, unreacted polymerizable monomers remaining in the liquid crystal layer 30 are further polymerized by irradiation of light from the backlight in the steps such as aging, which sometimes changes the tilt angles already given by the PSA layer.

As above, the PSA layers 13 and 23 are formed by preparing a composition for a liquid crystal layer which includes a liquid crystal material and a composition for a polymer layer containing a polymerizable monomer and a radical polymerization initiator; injecting the prepared composition between an array substrate and a color filter substrate; and causing radical polymerization of the polymerizable monomer by irradiating the liquid crystal layer 30 with a certain amount of light. At this time, if the light irradiation is performed while a voltage not lower than a threshold voltage is applied to the liquid crystal layer 30, a PSA layer having higher alignment stability can be obtained.

In the liquid crystal display device according to the first embodiment, the array substrate 10, the liquid crystal layer 30, and the color filter substrate 20 are stacked in this order from the back surface side to the screen side of the liquid crystal display device. The supporting substrate 11 of the array substrate 10 has a polarizing plate on its back surface. The supporting substrate 21 of the color filter substrate 20 also has a polarizing plate on the screen side. Further, retardation films may be disposed on these polarizing plates, and these polarizing plates may be circularly polarizing plates.

The liquid crystal display device according to the first embodiment may be of any of a transmission type, a reflection type, and a transflective type. In the case of a transmission or transflective type, the liquid crystal display device according to the first embodiment is further provided with a backlight. The backlight is disposed on the back surface side of the array substrate 10, so that light emitted therefrom passes through the array substrate 10, the liquid crystal layer 30 and the color filter substrate 20 in this order. In the case of a reflection or transflective type, the array substrate 10 is further provided with a light reflector for reflecting external light. At least in a region in which reflected light is used for display, the polarizing plate of the color filter substrate 20 should be a circularly polarizing plate provided with a so-called λ/4 retarder.

In the liquid crystal display device according to the first embodiment, the color filter on array mode may be employed, that is, the array substrate 10 may be provided with color filters. The liquid crystal display device according to the first embodiment may be a monochrome display. In this case, no color filter is needed.

The liquid crystal layer 30 is filled with a liquid crystal material that is aligned in specific directions when a certain voltage is applied. The alignment of the liquid crystal molecules in the liquid crystal layer 30 is controlled by applying a voltage not lower than a threshold voltage, and the control mode of the liquid crystal molecules in the liquid crystal display device according to the first embodiment is a mode in which one or both of the substrates has/have slits in electrodes. In this case, a wide viewing angle can be achieved.

Regarding the liquid crystal display device according to the first embodiment, the composition of the alignment films, the monomer components for PSA layer formation or radical polymerization initiator components in the liquid crystal layer, the monomer components for PSA layer formation in the PSA layers, the amount of the remaining monomers for PSA layer formation or the radical polymerization initiator in the liquid crystal layer, the ratio of the monomers for PSA layer formation or the radical polymerization initiator in the PSA layers, and the like can be analyzed by disassembling the liquid crystal display device and performing a chemical analysis by nuclear magnetic resonance (NMR) analysis, Fourier transform infrared spectroscopy (FT-IR), mass spectrometry (MS), or the like.

### Example 1

Hereinafter, Example 1 is described in which a liquid crystal cell of the liquid crystal display device according to the first embodiment was actually produced. First, a polyimide solution as a vertical alignment film material was applied to the surfaces of a pair of supporting substrates. The substrates were pre-baked at 80°C and then post-baked at 200°C for 60 minutes. Each of the pixel electrodes on the supporting substrates has a plurality of slits that have a linear shape when viewed from the normal direction of the supporting substrate surfaces.

Next, a seal was applied to one of the supporting substrates and beads were scattered on the other supporting substrate. The supporting substrates were attached to each other, and a composition for a liquid crystal layer which contains a liquid crystal material having negative dielectric anisotropy was injected between the substrates. In the present example, the following samples were prepared as the composition for a liquid crystal layer: a sample containing a bifunctional monomer being a compound represented by the following formula (12) and a radical polymerization initiator being a compound represented by the following formula (13); a sample containing a bifunctional monomer being a compound represented by the following formula (12) and a radical polymerization initiator being a compound represented by the following formula (14); and a sample containing a bifunctional monomer being a compound represented by the following formula (12) and two radical polymerization initiators (benzophenone and N,N-diethylaniline) represented by the following formula (15). Each sample was adjusted to have a concentration of the radical polymerization initiator, relative to the bifunctional monomer, of 0.01 mol%, 0.1 mol%, 1 mol%, 2.5 mol%, or 5 mol%. Thereby, 15 samples in total were produced. In preparing samples based on the following formula (15), benzophenone and N,N-diethylaniline were added at equimolar % concentrations. The above mol% shows the amount of each of benzophenone and N,N-diethylaniline.

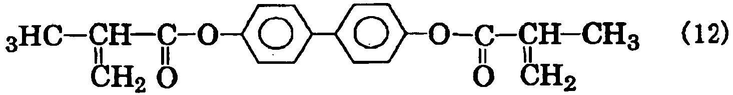

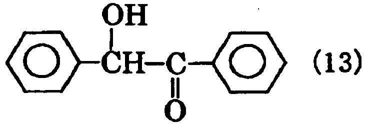

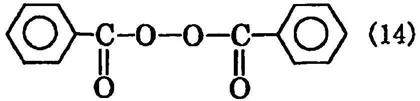

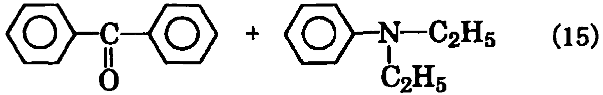

The following formula (16) illustrates how a radical polymerization initiator being a compound represented by formula (13) forms radicals when irradiated with ultraviolet light.

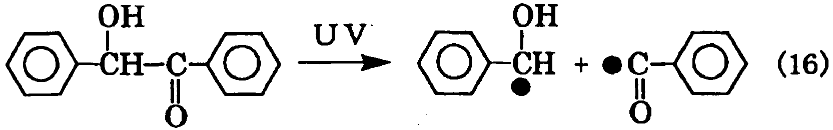

The following formula (17) illustrates how a radical polymerization initiator being a compound represented by formula (14) forms radicals when irradiated with ultraviolet light. In this case, carbon dioxide (CO₂) is generated as well as the radicals, unlike the case of the above formula (16).

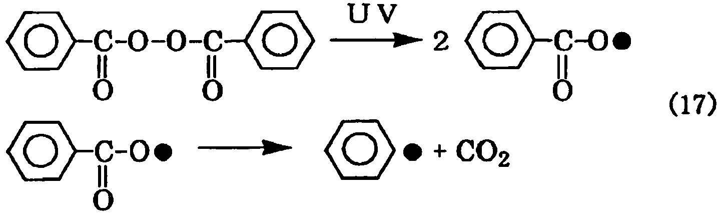

The following formula (18) illustrates how a radical polymerization initiator being a compound represented by formula (15) forms radicals when irradiated with ultraviolet light.

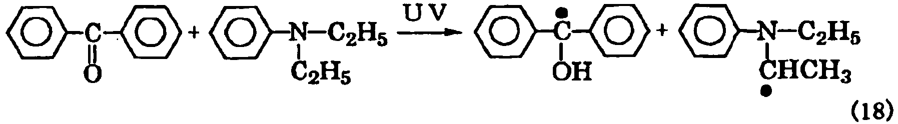

Next, the supporting substrates with the composition for a liquid crystal layer injected therebetween were heated to 130°C and quenched. Then, the polymerization reaction of the bifunctional monomer was allowed to proceed under irradiation of the black light (UV rays with a peak wavelength in the range of 300 to 350 nm) for 20 minutes while a voltage not lower than a threshold voltage was applied. In this way, liquid crystal cells having a PSA layer on each vertical alignment film were prepared.

Subsequently, the respective liquid crystal cells prepared as above were irradiated with light from the backlight while an AC voltage of 5 V was applied thereto for about 100 hours. Then, the voltage holding ratio (VHR), residual direct current (DC) voltage, and change in the pretilt angle were measured for the respective liquid crystal cells.

VHR was measured under the conditions of 1 V and 70°C. The residual DC voltage was measured at 40°C by Flicker Elimination technology using a DC offset voltage of 1 V. The change in the pretilt angle was calculated by subtracting the pretilt angle before backlight irradiation and energization from the pretilt angle after the irradiation and energization.

Also, a liquid crystal cell which was the same as the samples of the present example, except for including no radical polymer in the composition for a liquid crystal layer, was produced as a reference cell to be compared with the above samples. Then, the VHR, residual DC voltage, and change in the tilt angle due to the backlight irradiation and energization were measured for the reference cell in the same ways.

Table 1 shows the results of the VHR (%) after the backlight irradiation on the samples for about 100 hours.

**[Table 1]**

| | 0 mol % | 0.01 mol % | 0.1 mol % | 1 mol % | 2.5 mol % | 5 mol % |
|---|---|---|---|---|---|---|
| Formula (13) | - | 99.5 | 99.2 | 99.0 | 98.1 | 95.5 |
| Formula (14) | - | 99.1 | 97.5 | 93.2 | 84.2 | 75.0 |
| Formula (15) | - | 99.5 | 99.0 | 98.9 | 98.5 | 95.5 |
| No polymerization initiator | 99.5 | - | - | - | - | - |

Table 1 shows that, in comparison between the samples having the same concentration of a radical polymerization initiator, the sample containing the compound represented by formula (14) as a radical polymerization initiator at the start of the polymerization reaction showed a larger decrease in the VHR than the samples containing the compound represented by formula (13) or (15) as a radical polymerization initiator at the start of the polymerization reaction. This is probably because the compound represented by formula (14) generated carbon dioxide (CO₂) in the initiation reaction of the radical polymerization to increase the vapor density in the liquid crystal layer.

The samples showed a VHR of not lower than 99% and had high reliability in the case of having a concentration of a radical polymerization initiator of 0.01 mol%, irrespective of whether the initiator was the compound represented by formula (13), the compound represented by formula (14), or the compound represented by formula (15).

The samples also showed a VHR of not lower than 99% and had high reliability in the case of containing a radical polymerization initiator of the compound represented by formula (13) as long as the concentration of the initiator was 1 mol% or lower.

The sample containing no radical polymerization initiator did not show a much decrease in the VHR because the concentration of radicals remaining unreacted was low.

Table 2 shows the results of the residual DC voltage (mV) measurement after irradiation of the light from the backlight for about 100 hours. The value of the residual DC voltage is a value measured after one-hour application of DC voltage.

**[Table 2]**

| | 0 mol% | 0.01 mol% | 0.1 mol% | 1 mol % | 2.5 mol % | 5 mol % |
|---|---|---|---|---|---|---|
| Formula (13) | - | 30 or lower | 50 | 100 | 180 | 260 |
| Formula (14) | - | 70 | 300 | 500 | 650 | 750 |
| Formula (15) | - | 30 or lower | 30 or lower | 40 | 70 | 160 |
| No polymerization initiator | 30 or lower | - | - | - | - | - |

Table 2 shows that, in comparison between the samples having the same concentration of a radical polymerization initiator, the sample containing the compound represented by formula (14) as a radical polymerization initiator at the start of the polymerization reaction showed a higher residual DC voltage than the samples containing the compound represented by formula (13) or (15) as a radical polymerization initiator at the start of the polymerization reaction. This is probably because the compound represented by formula (14) generated carbon dioxide (CO₂) in the initiation reaction of the radical polymerization to increase the vapor density in the liquid crystal layer.

The samples had a residual DC voltage of 100 (mV) or lower, and reduced the probability of image sticking in the case of having a concentration of a radical polymerization initiator of 0.01 mol%, irrespective of whether the initiator was the compound represented by formula (13), the compound represented by formula (14), or the compound represented by formula (15).

The samples also had a residual DC voltage of 100 or lower, and reduced the probability of image sticking in the case of containing a radical polymerization initiator of the compound represented by formula (13) or (15) as long as the concentration of the initiator was 1 mol% or lower.

The sample containing no radical polymerization initiator did not show a much decrease in the residual DC voltage because the concentration of radicals remaining unreacted was low.

Table 3 shows the results of a change (°) in the pretilt angle after irradiation of each of the above samples with light from the backlight for about 100 hours while an AC voltage of 5 V was applied.

**[Table 3]**

| | 0 mol% | 0.01 mol % | 0.1 mol % | 1 mol % | 2.5 mol % | 5 mol % |
|---|---|---|---|---|---|---|
| Formula (13) | - | 0.05 | 0.02 | 0.01 | 0.01 | 0.01 |
| Formula (14) | - | 0.06 | 0.03 | 0.03 | 0.03 | 0.02 |
| Formula (15) | - | 0.04 | 0.01 | 0.01 | 0.01 | 0.01 |
| No polymerization initiator | 0.3 | - | - | - | - | - |

Table 3 shows that, in comparison between the samples, the sample containing the compound represented by formula (14) as a radical polymerization initiator at the start of the polymerization reaction showed a change in the pretilt angle which was almost the same as those of the samples containing the compound represented by formula (13) or (15) as a radical polymerization initiator at the start of the polymerization reaction. In contrast, in comparison between the samples containing a radical polymerization initiator and the sample containing no radical polymerization initiator, the one containing no radical polymerization initiator showed a change in the pretilt angle which was an order of magnitude greater than the ones containing a radical polymerization initiator. This is probably because the polymerization proceeded sufficiently and irradiation of light from the backlight did not easily cause further polymerization in the case that a radical polymerization initiator being a compound represented by formula (13), (14), or (15) was added; in contrast, unreacted monomers remained in the case that no radical polymerization initiator was added because irradiation of light from the backlight caused further polymerization, so that the pretilt angle was changed.

The liquid crystal cell was disassembled after the measurement to evaluate the molecular weight distribution of the polymer layer by GPC. The molecular weight distribution of the polymer that formed the polymer layer with an aid of any of the polymerization initiators represented by formula (13), (14), and (15) was 5, while the molecular weight distribution of the polymer that formed the polymer layer without a polymerization initiator was 15 or more.

The above results show that the probability of image sticking caused by a change in the pretilt angle can be reduced by mixing a radical polymerization initiator with the polymerizable monomer in the composition for a liquid crystal layer, and further, the probability of image sticking can be further reduced by controlling the amount of the radical polymerization initiator to 1 mol% or lower relative to the polymerizable monomer. Here, the radical polymerization initiator is preferably a material that does not generate gas such as carbon dioxide (CO₂) when the polymerization reaction starts, in terms of suppression of a decrease in VHR and an increase in the residual DC voltage. In this case, image sticking can be further suppressed. The results also show that a decrease in VHR and an increase in the residual DC voltage are more suppressed when the concentration of the radical polymerization initiator is 0.1 mol% than when the concentration is 1 mol%; and a decrease in VHR and an increase in the residual DC voltage are more suppressed when the concentration of the radical polymerization initiator is 0.01 mol% than when the concentration is 0.1 mol%.

### Second embodiment

The second embodiment is an example of the liquid crystal display device of the present invention which includes the composition for a polymer layer and the composition for a liquid crystal layer according to the present invention. The liquid crystal display device according to the second embodiment has a PSA layer formed by radical polymerization of polymerizable monomers on the alignment film thereof as in the case of the liquid crystal display device according to the first embodiment. The liquid crystal display device according to the second embodiment is, however, different from the liquid crystal display device according to the first embodiment in that it has an alignment film on which an alignment treatment has been performed which set the pretilt angle to 80° or larger and smaller than 90°. The liquid crystal display device according to the second embodiment is almost the same as the liquid crystal display device according to the first embodiment regarding components other than the alignment film. In forming a PSA layer in the second embodiment, light irradiation is preferably performed while a voltage not lower than a threshold voltage is applied to the liquid crystal layer; still, a PSA layer having comparatively high alignment control ability can be obtained by light irradiation without application of a voltage not lower than a threshold voltage to the liquid crystal layer because the alignment treatment has been performed.

As in the case of the first embodiment, the material for alignment films in the second embodiment may contain monomers.

Hereinafter, a photo-alignment treatment as an alignment treatment, that is, a method for forming a photo-alignment film is described in detail. First, a solution prepared by dissolving a photo-alignment film material having a photoactive functional group in a solvent is applied, by printing or the like, to a supporting substrate on which an alignment film is to be formed. The applied solution is pre-baked, and then post-baked so as to evaporate the solvent. In this way, a base film is formed. The photoactive functional group may be of either a photo-coupling type or a photo-decomposition type. Examples of compounds having a photoactive functional group include polyamides represented by the following formula (19) and polyimides represented by the following formula (20). The functional group Z in the following formula functions as a photoactive functional group.

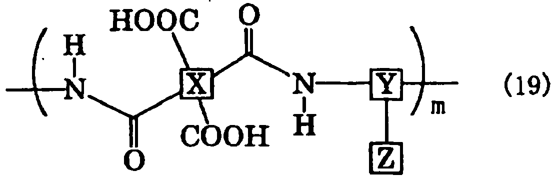

In the formula, X represents any of groups represented by the following formulae (21-1) to (21-8); Y represents any of groups represented by the following formulae (22-1) to (22-15); Z represents a functional group containing any of photoactive functional groups represented by the following formulae (23-1) to (23-6); and m represents the number of repetitions of the parenthesized structure and is a positive integer.

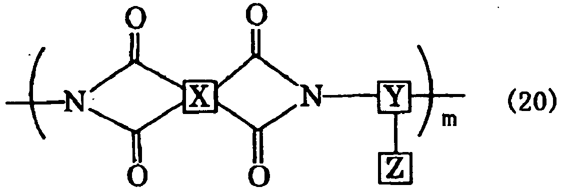

In the formula, X represents any of groups represented by the following formulae (21-1) to (21-8); Y represents any of groups represented by the following formulae (22-1) to (22-15); Z represents a functional group containing any of photoactive functional groups represented by the following formulae (23-1) to (23-6); and m represents the number of repetitions of the parenthesized structure and is a positive integer.

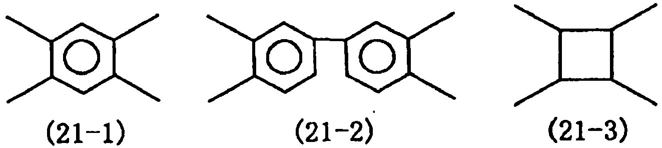

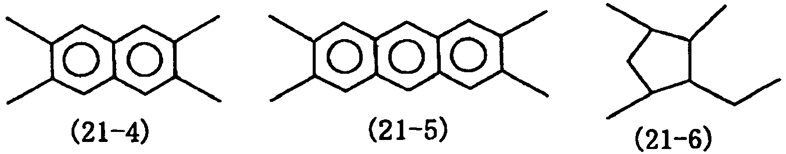

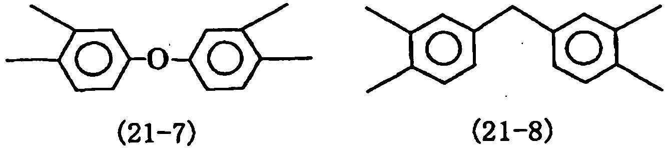

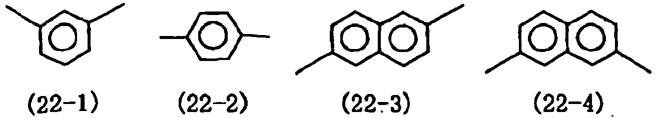

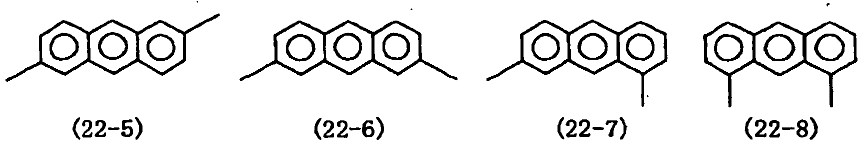

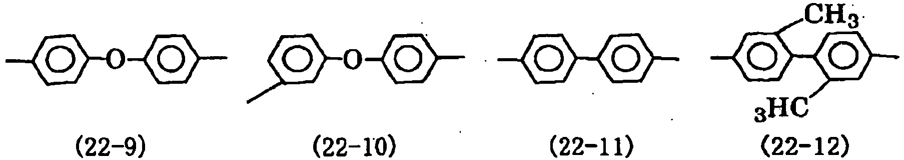

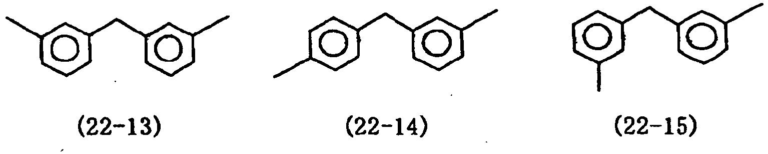

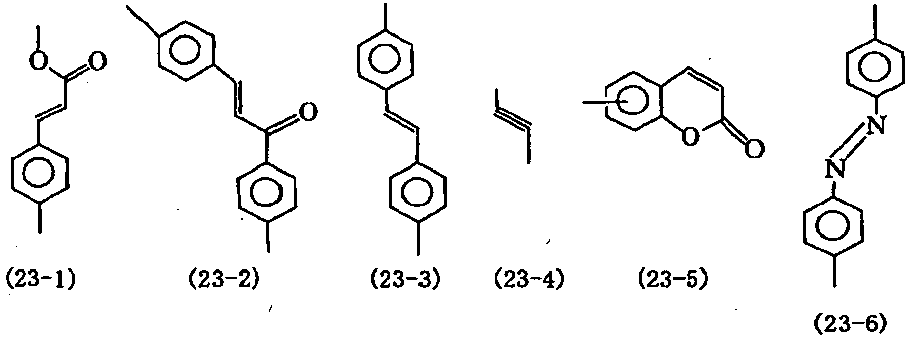

The photo-alignment film material used in the second embodiment may be a copolymer having a side chain containing a photoactive functional group and a side chain free from photoactive functional groups. Examples of such a copolymer include compounds represented by the following formulae (24) and (25).

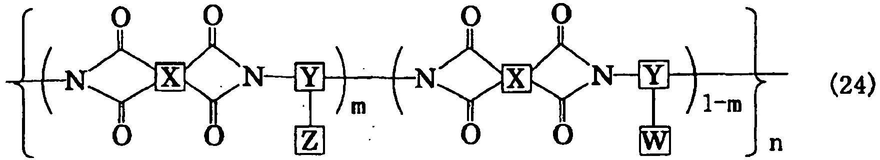

In the formula, X represents any of groups represented by the formulae (21-1) to (21-8); Y represents any of groups represented by the formulae (22-1) to (22-15); Z represents a functional group containing any of photoactive functional groups represented by the formulae (23-1) to (23-6); W represents any of groups represented by the following formulae (26-1) to (26-6) ; m represents a ratio of monomer units in the copolymer and is a value in the range of 0 to 1; and n represents the degree of polymerization and is a positive integer. In the following formulae (26-1) to (26-6), D and E, which may be the same or different, each represent a divalent group selected from the group consisting of O, CO, COO, OCO, NHCO, CONH, S, two phenylene groups coupled to each other by a direct bond, a methylene group, and C2-6 alkylene groups.

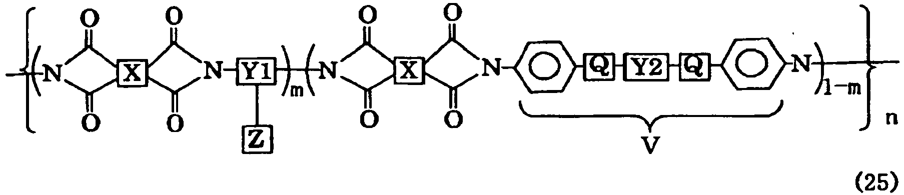

In the formula, X represents any of groups represented by the formulae (21-1) to (21-8); Y1 represents any of groups represented by the formulae (22-1) to (22-15); Y2 represents a divalent organic group with a C4-40 alicyclic skeleton; Z represents a functional group containing any of photoactive functional groups represented by the formulae (23-1) to (23-6); Q represents O, CO, COO, OCO, NHCO, S or a direct bond between the phenylene group and Y2; m represents a ratio of monomer units in the copolymer and is a value in the range of 0 to 1; and n represents the degree of polymerization and is a positive integer. Examples of the moiety V are shown as the following formulae (27-1) to (27-8). In the following formulae (27-1) to (27-8), A represents a phenylene group or a direct bond between the groups on the both sides of A; and B and C, which may be the same or different, each represent a divalent group selected from O, CO, COO, OCO, NHCO, CONH, S, Ar-Ar-CH₂- (Ar represents a phenylene group), a methylene group, or a C2-6 alkylene group, and a phenylene group.

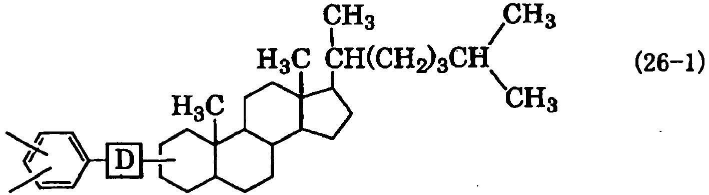

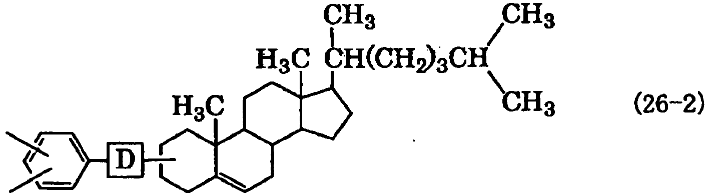

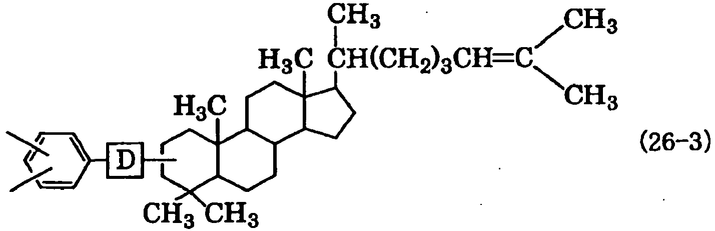

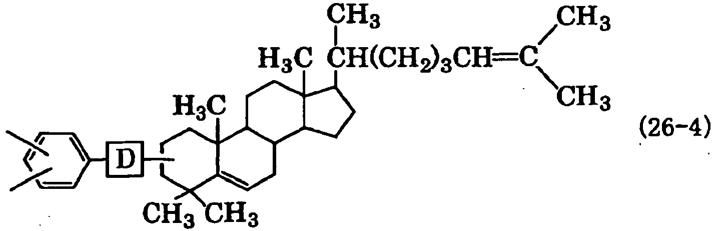

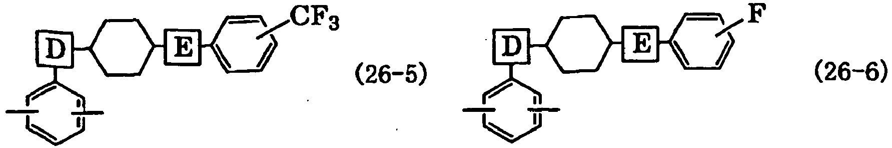

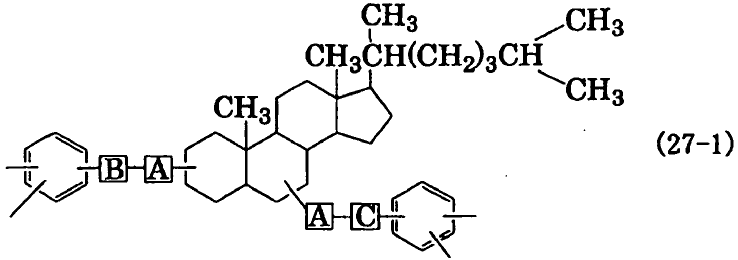

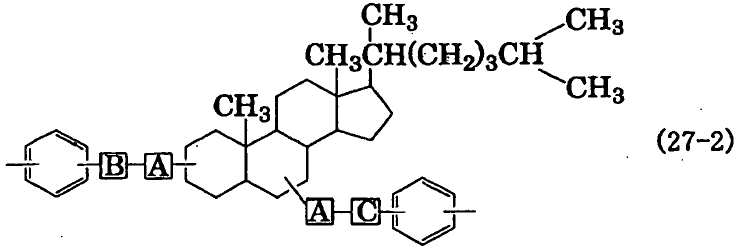

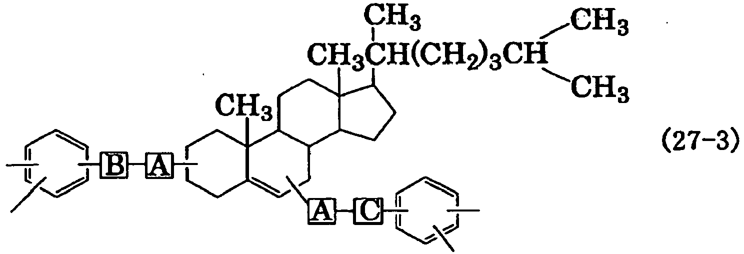

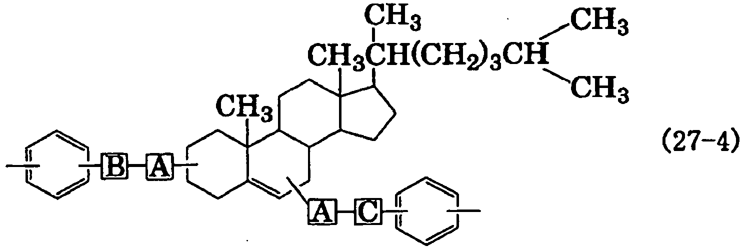

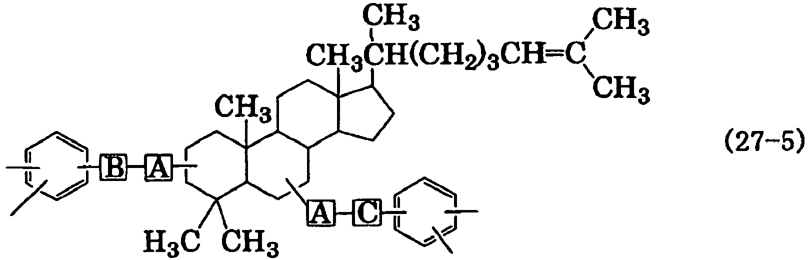

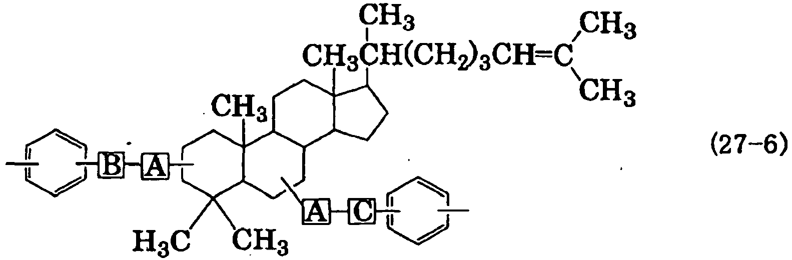

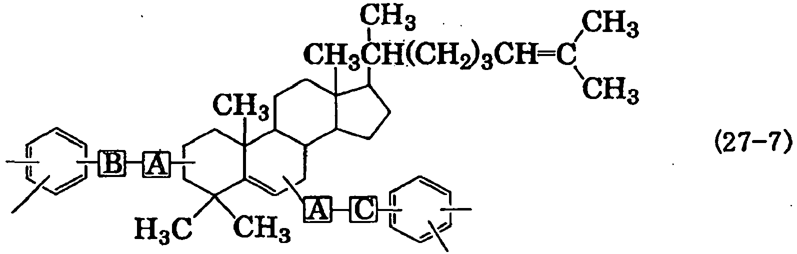

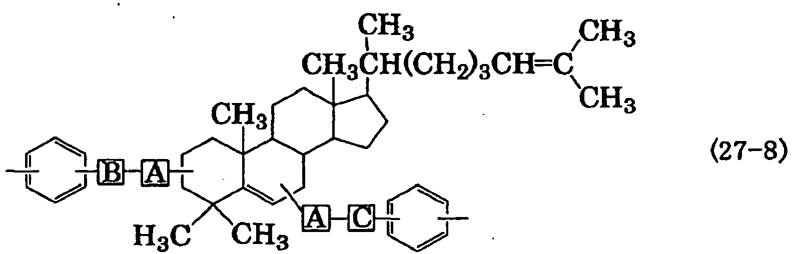

Next, the supporting substrate surface is irradiated, for example, with a predetermined dose of UV rays, preferably polarized UV rays from an oblique direction to the surface. In this way, a photo-alignment film is formed. The pretilt angle of the liquid crystal molecules given by the photo-alignment film can be adjusted by the irradiation time, the intensity and wavelength of light, the type of the photoactive functional group, and the like.

In this process, the viewing angle can be greatly improved if the directions of the alignment treatment for the substrates are perpendicular to each other and the display device is in the 4D-RTN (reverse twisted nematic) mode in which each pixel is divided into four domains. In the 4D-RTN mode, very precise pretilt control is required. Regarding the liquid crystal display device according to the second embodiment, a satisfactory level of the alignment stability can be achieved even in the case of the 4D-RTN mode because the pretilt alignment is highly stabilized by the PSA layers on the alignment layers.

Regarding the liquid crystal display device according to the second embodiment, the composition of the alignment films, the monomer components for PSA layer formation or radical polymerization initiator components in the liquid crystal layer, the monomer components for PSA layer formation in the PSA layers, the amount of the remaining monomers for PSA layer formation or the radical polymerization initiator in the liquid crystal layer, the ratio of the monomers for PSA layer formation or the radical polymerization initiator in the PSA layers, and the like can be analyzed by disassembling the liquid crystal display device and performing a chemical analysis by nuclear magnetic resonance (NMR) analysis, Fourier transform infrared spectroscopy (FT-IR), mass spectrometry (MS), or the like.

### Example 2

Hereinafter, Example 2 is described in which a liquid crystal cell of the liquid crystal display device according to the second embodiment was actually produced. First, a polyimide solution as a vertical alignment film material was applied to the surfaces of a pair of supporting substrates. The substrates were pre-baked at 80°C and then post-baked at 200°C.

Next, a photo-alignment treatment was performed by using polarized UV rays with a wavelength of about 300 nm from a direction that was 40° to 50° oblique to the surfaces of the supporting substrates. The dose of UV rays was 100 mJ/cm².

Next, a seal was applied to one of the supporting substrates and beads were scattered on the other supporting substrate. The supporting substrates were attached to each other, and a composition for a liquid crystal layer which contains a liquid crystal material having negative dielectric anisotropy was injected between the substrates. In the present example, the following samples were prepared as the composition for a liquid crystal layer as in the case of Example 1: a sample containing a bifunctional monomer being a compound represented by the above formula (12) and a radical polymerization initiator being a compound represented by the above formula (13); a sample containing a bifunctional monomer being a compound represented by the above formula (12) and a radical polymerization initiator being a compound represented by the above formula (14); and a sample containing a bifunctional monomer being a compound represented by the above formula (12) and two radical polymerization initiators (benzophenone and N,N-diethylaniline) represented by the above formula (15). Each sample was adjusted to have a concentration of the radical polymerization initiator, relative to the bifunctional monomer, of 0.01 mol%, 0.1 mol%, 1 mol%, 2.5 mol%, or 5 mol%. Thereby, 15 samples in total were produced. In preparing samples based on the above formula (15), benzophenone and N,N-diethylaniline were added at equimolar % concentrations. The above mol% shows the amount of each of benzophenone and N,N-diethylaniline.

Next, the supporting substrates with the composition for a liquid crystal layer injected therebetween were heated to 130°C and quenched. Then, the polymerization reaction of the bifunctional monomer was allowed to proceed under irradiation of the black light (UV rays with a peak wavelength in the range of 300 to 350 nm) for 20 minutes while no voltage was applied. In this way, liquid crystal cells having a PSA layer on each vertical alignment film was prepared.

Subsequently, the respective liquid crystal cells prepared as above were irradiated with light from the backlight was applied thereto at 5 V for about 100 hours. Then, the voltage holding ratio (VHR), residual DC voltage, and change in the pretilt angle were measured for the respective liquid crystal cells.

VHR was measured under the conditions of 1 V and 70°C. The residual DC voltage was measured at 40°C by Flicker Elimination technology using a DC offset voltage of 1 V. The change in the pretilt angle was calculated by subtracting the pretilt angle before backlight irradiation and energization from the pretilt angle after the irradiation and energization.

Also, a liquid crystal cell which was the same as the samples of the present example, except for including no radical polymer in the composition for a liquid crystal layer, was produced as a reference cell to be compared with the above samples. Then, the VHR, residual DC voltage, and change in the tilt angle due to the backlight irradiation and energization were measured for the reference cell in the same ways.

Table 4 shows the results of the VHR (%) after the backlight irradiation on the samples for about 100 hours.

**[Table 4]**

| | 0 mol % | 0.01 mol % | 0.1 mol % | 1 mol % | 2.5 mol% | 5 mol% |
|---|---|---|---|---|---|---|
| Formula (13) | - | 98.1 | 98.2 | 97.0 | 96.5 | 94.1 |
| Formula (14) | - | 99.1 | 97.2 | 93.6 | 86.8 | 79.0 |
| Formula (15) | - | 99.1 | 99.0 | 98.3 | 97.1 | 95.6 |
| No polymerization initiator | 99.2 | - | - | - | - | - |

Table 4 shows that, in comparison between the samples having the same concentration of a radical polymerization initiator, the sample containing the compound represented by formula (14) as a radical polymerization initiator at the start of the polymerization reaction showed a larger decrease in the VHR than the samples containing the compound represented by formula (13) or (15) as a radical polymerization initiator at the start of the polymerization reaction. This is probably because the compound represented by formula (14) generated carbon dioxide (CO₂) in the initiation reaction of the radical polymerization to increase the vapor density in the liquid crystal layer.

The samples showed a VHR of not lower than 99% and had high reliability in the case of having a concentration of a radical polymerization initiator of 0.01 mol%, irrespective of whether the initiator was the compound represented by formula (13), the compound represented by formula (14), or the compound represented by formula (15).

The sample containing no radical polymerization initiator did not show a much decrease in the VHR because the concentration of radicals remaining unreacted was low.

Table 5 shows the results of the residual DC voltage (mV) measurement after irradiation of the light from the backlight for about 100 hours. The value of the residual DC voltage is a value measured after one-hour application of DC voltage.

**[Table 5]**

| | 0 mol % | 0.01 mol % | 0.1 mol % | 1 mol % | 2.5 mol % | 5 mol % |
|---|---|---|---|---|---|---|
| Formula (13) | - | 30 or lower | 70 | 150 | 250 | 320 |
| Formula (14) | - | 100 | 350 | 500 | 650 | 750 |
| Formula (15) | - | 30 or lower | 30 or lower | 30 or lower | 40 | 70 |
| No polymerization initiator | 30 or lower | - | - | - | - | - |

Table 5 shows that, in comparison between the samples having the same concentration of a radical polymerization initiator, the sample containing the compound represented by formula (14) as a radical polymerization initiator at the start of the polymerization reaction showed a higher residual DC voltage than the samples containing the compound represented by formula (13) or (15) as a radical polymerization initiator at the start of the polymerization reaction. This is probably because the compound represented by formula (14) generated carbon dioxide (CO₂) in the initiation reaction of the radical polymerization to increase the vapor density in the liquid crystal layer.

The samples had a residual DC voltage of 100 (mV) or lower, and reduced the probability of image sticking in the case of having a concentration of a radical polymerization initiator of 0.01 mol%, irrespective of whether the initiator was the compound represented by formula (13), the compound represented by formula (14), or the compound represented by formula (15).

The sample containing no radical polymerization initiator did not show a much decrease in the residual DC voltage because the concentration of radicals remaining unreacted was low.

Table 6 shows the results of a change (°) in the tilt angle after irradiation of each of the above samples with light from the backlight for about 100 hours while an AC voltage of 5 V was applied.

**[Table 6]**

| | 0 mol % | 0.01 mol % | 0.1 mol % | 1 mol % | 2.5 mol % | 5 mol % |
|---|---|---|---|---|---|---|
| Formula (13) | - | 0.05 | 0.02 | 0.01 | 0.01 | 0.01 |
| Formula (14) | - | 0.06 | 0.03 | 0.03 | 0.02 | 0.02 |
| Formula (15) | - | 0.03 | 0.01 | 0.01 | 0.01 | 0.01 |
| No polymerization initiator | 0.3 | - | - | - | - | - |

Table 6 shows that, in comparison between the samples, the sample containing the compound represented by formula (14) as a radical polymerization initiator at the start of the polymerization reaction showed a change in the pretilt angle which was almost the same as those of the samples containing the compound represented by formula (13) or (15) as a radical polymerization initiator at the start of the polymerization reaction. In contrast, in comparison between the samples containing a radical polymerization initiator and the sample containing no radical polymerization initiator, the one containing no radical polymerization initiator showed a change in the pretilt angle which was an order of magnitude greater than the ones containing a radical polymerization initiator. This is probably because the polymerization proceeded sufficiently and irradiation of light from the backlight did not easily cause further polymerization in the case that a radical polymerization initiator being a compound represented by formula (13), (14), or (15) was added; in contrast, unreacted monomers remained in the case that no radical polymerization initiator was added because irradiation of light from the backlight caused further polymerization, so that the pretilt angle was changed.

The liquid crystal cell was disassembled after the measurement to evaluate the molecular weight distribution of the polymer layer by GPC. The molecular weight distribution of the polymer that formed the polymer layer with an aid of any of the polymerization initiators represented by formula (13), (14), and (15) was 5, while the molecular weight distribution of the polymer that formed the polymer layer without a polymerization initiator was 15 or more.

The above results show that the probability of image sticking caused by a change in the pretilt angle can be reduced by mixing a radical polymerization initiator with the polymerizable monomer in the composition for a liquid crystal layer, and further, the probability of image sticking can be further reduced by controlling the amount of the radical polymerization initiator to 1 mol% or lower relative to the polymerizable monomer. Here, the radical polymerization initiator is preferably a material that does not generate gas such as carbon dioxide (CO₂) when the polymerization reaction starts, in terms of suppression of a decrease in VHR and an increase in the residual DC voltage. In this case, image sticking can be further suppressed. The results also show that a decrease in VHR and an increase in the residual DC voltage are more suppressed when the concentration of the radical polymerization initiator is 0.1 mol% than when the concentration is 1 mol%; and a decrease in VHR and an increase in the residual DC voltage are more suppressed when the concentration of the radical polymerization initiator is 0.01 mol% than when the concentration is 0.1 mol% . The results also show that, even if the polymer layer is formed by polymerization while no voltage is applied to the liquid crystal layer, use of an alignment film on which an alignment treatment was performed makes it possible to obtain an alignment film having sufficient alignment control ability which effectively reduces the probability of image sticking.

### Third embodiment

The third embodiment is an example of the liquid crystal display device of the present invention which includes the composition for a polymer layer and the composition for a liquid crystal layer according to the present invention. The liquid crystal display device according to the third embodiment has a PSA layer formed by radical polymerization of polymerizable monomers on the alignment film thereof as in the case of the liquid crystal display devices according to the first embodiment and the second embodiment. The liquid crystal display device according to the third embodiment, however, is different from the liquid crystal display devices according to the first embodiment and the second embodiment in that the radical polymerization initiator for triggering the polymerization reaction of polymerizable monomers in the present embodiment also serves as a polymerization terminator for stopping the radical polymerization. Hereinafter, the radical polymerization initiator which functions also as a terminator is also referred to as an iniferter. The liquid crystal display device according to the third embodiment is almost the same as the liquid crystal display device according to the first or second embodiment regarding components other than the PSA layer. In the third embodiment, the alignment film used may be one on which an alignment treatment is not performed as in the first embodiment, or may be one on which a photo-alignment treatment is performed as in the second embodiment. In the third embodiment, while light irradiation is performed, a voltage not lower than a threshold voltage is not necessarily applied to the liquid crystal layer; still, the light irradiation is preferably performed while a voltage not lower than a threshold voltage is applied to the liquid crystal layer in order to provide high alignment stability to the alignment film.

In the following, a radical polymerization reaction mechanism in the case of using an iniferter is illustrated.

I₂ →2_{I}• (Initiation reaction)

2I• + M→I-M-I⇄I-M•+I• (Propagation reaction 1)

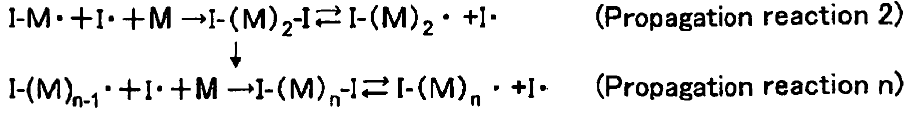

In this way, the iniferter triggers the initiation reaction by bonding to monomers, and also terminates the radical polymerization reaction by bonding to an end of the polymer. Thereby, radicals in the polymer constituting the alignment film and the polymer layer are reduced. The iniferter therefore can suppress accumulation of residual DC voltage in an alignment film and a polymer layer. The liquid crystal display device according to the third embodiment therefore can prevent image sticking caused by the residual DC voltage.

Examples of the iniferter which can be used in the third embodiment include compounds represented by the following formulae (10-1) to (10-7).

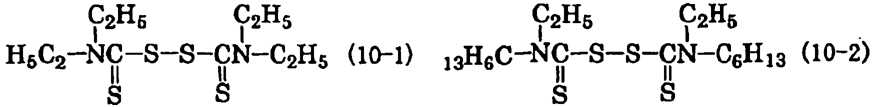

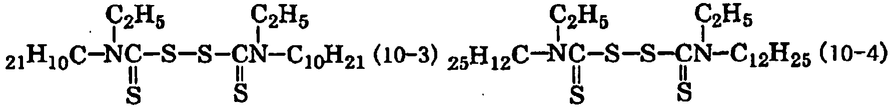

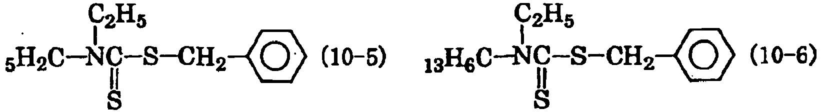

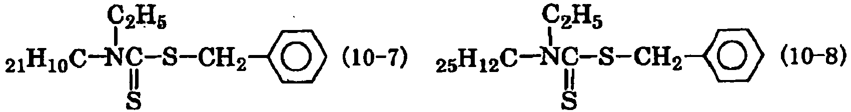

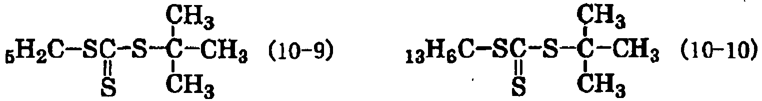

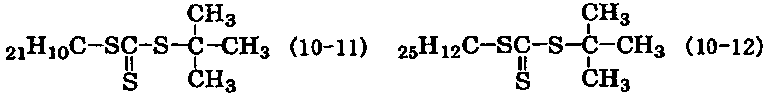

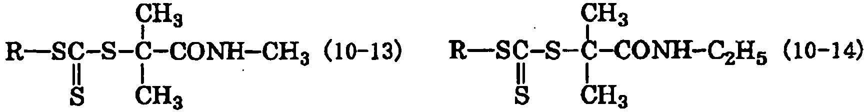

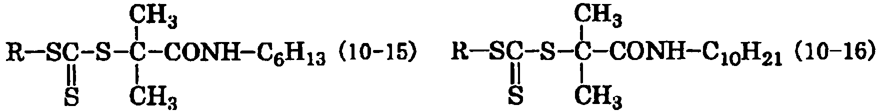

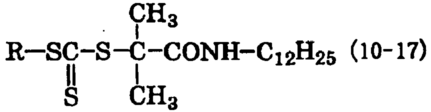

In the formula, R represents CH₃, C₂H₅, C₆H₁₃, C₁₀H₂₁ or C₁₂H₂₅.

The compounds represented by formulae (10-1) to (10-17) which can be used as the iniferter are suitable for the iniferter used in the third embodiment in terms of suppression of image sticking because the compounds do not generate gas such as carbon dioxide (CO₂) at the start of the radical polymerization.

Examples of the iniferter having a higher solubility in the liquid crystal layer in the third embodiment include compounds represented by the following formulae (11-1) to (11-3).

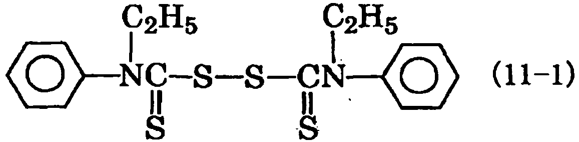

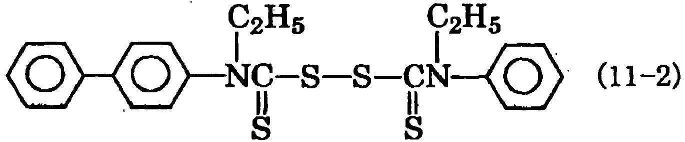

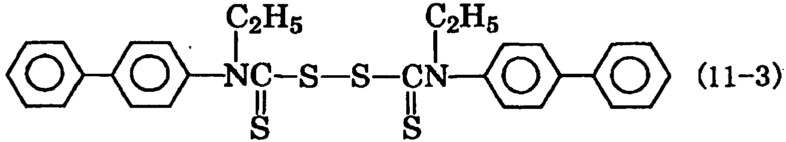

Each of the compounds represented by formulae (11-1) to (11-3) has a phenyl group or 1,4-phenylene group at one or both ends thereof which is/are the polymerization starting point (s), and thus has high solubility to the liquid crystal material. Such an iniferter having high solubility to the liquid crystal material is more efficiently used in the reaction. The reaction speed of the polymerization is therefore further increased, and the probability of unreacted monomer remaining is further reduced.

Regarding the liquid crystal display device according to the third embodiment, the composition of the alignment films, the monomer components for PSA layer formation or iniferter components in the liquid crystal layer, the monomer components for PSA layer formation in the PSA layers, the amount of the contaminating monomers for PSA layer formation or the iniferter in the liquid crystal layer, the ratio of the monomers for PSA layer formation or the iniferter in the PSA layers, and the like can be analyzed by disassembling the liquid crystal display device and performing a chemical analysis by nuclear magnetic resonance (NMR) analysis, Fourier transform infrared spectroscopy (FT-IR), mass spectrometry (MS), or the like.

### Example 3

Hereinafter, Example 3 is described in which a liquid crystal cell of the liquid crystal display device according to the third embodiment was actually produced. First, a polyimide solution as a vertical alignment film material was applied to the surfaces of a pair of supporting substrates. The substrates were pre-baked at 80°C and then post-baked at 200°C.

Next, a seal was applied to one of the supporting substrates and beads were scattered on the other supporting substrate. The supporting substrates were attached to each other, and a composition for a liquid crystal layer which contains a liquid crystal material having negative dielectric anisotropy was injected between the substrates. In the present example, a sample containing a bifunctional monomer (M) being a compound represented by the above formula (12) and an iniferter being a compound represented by the following formula (28) was prepared as the composition for a liquid crystal layer. The sample was adjusted to have a concentration of the iniferter, relative to the bifunctional monomer, of 0.01 mol%, 0.1 mol%, 1 mol%, 2.5 mol%, or 5 mol%. Thereby, 5 samples in total were produced.

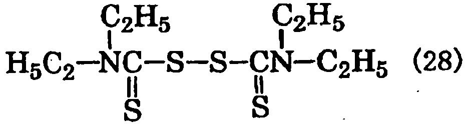

Here, the reaction mechanism of an iniferter represented by formula (28) is described below. The following formulae (29-1) to (29-3) show the three stages of the reaction mechanism that monomers are polymerized by the iniferter being the compound represented by formula (28).

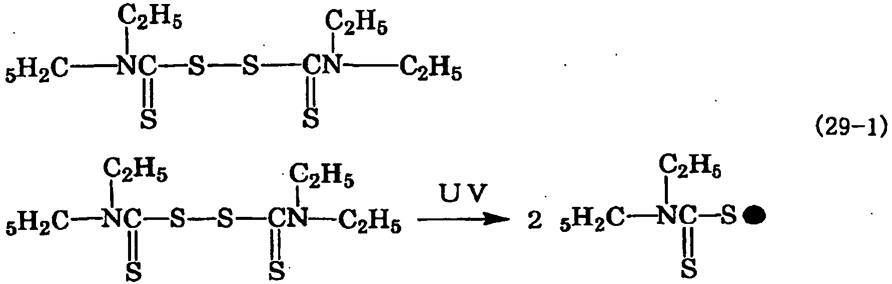

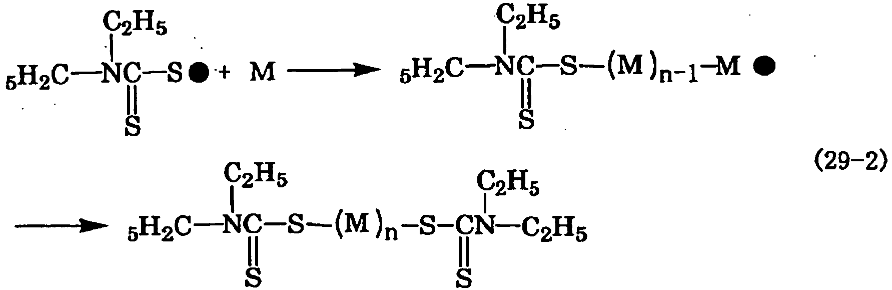

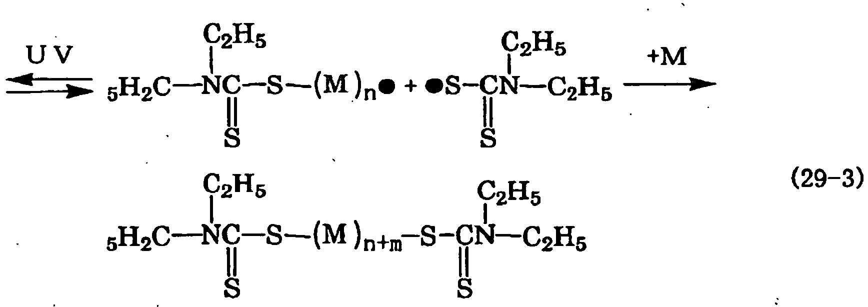

In the formula, M represents a monomer, and m and n each represent a positive integer.

The radical polymerization reaction in the third embodiment starts from generation of radicals in the iniferter upon irradiation of UV rays, as illustrated in the above formula (29-1). Next, as illustrated in the above formula (29-2), the iniferter having radicals bond to the monomer (M) so that the radical polymerization of the monomer (M) is started. As the radical polymerization in which a plurality of monomers (M) are bonded proceeds, the radicals at an end of the polymer and a thiocarbamate group form a covalent bond. When the system of formula (29-2) is further irradiated with light, the thiocarbamate group is separated as illustrated in formula (29-3), and the polymerization reaction of the monomer (M) proceeds again. That is, the thiocarbamate group in the above formula (29-3) functions as a chain transfer agent. Such bonding and separation of a thiocarbamate group are repeated, and the thiocarbamate group eventually forms a covalent bond with a radical at an end of the polymer, thereby terminating the radical polymerization reaction.

In formulae (29-1) to (29-3), the cleavage portion of the iniferter is always bonded to both ends of the monomer (M). Therefore, the concentration of the radicals in the liquid crystal layer is low compared to the case of using a common radical polymerization initiator.

Thus, use of an iniferter repeatedly initiating and terminating the polymerization is preferable to give a low radical concentration to the system containing monomers and/or polymers having a radical at the end thereof dissolved in the liquid crystal layer. Such use also reduces the residual DC voltage in the alignment film and the PSA layer, thereby reducing the probability of image sticking. Further, gas such as carbon dioxide (CO₂) is not generated in the above polymerization reaction, and image sticking caused thereby can also be suppressed.

Next, the supporting substrates between which the composition for a liquid crystal layer, containing an iniferter, was injected were heated to 130°C and quenched. Then, the polymerization reaction of the bifunctional monomer (M) was allowed to proceed under irradiation of the black light (UV rays with a peak wavelength in the range of 300 to 350 nm) for 20 minutes while a voltage not lower than a threshold voltage was applied. In this way, liquid crystal cells having a PSA layer on each vertical alignment film were prepared.

Subsequently, the respective liquid crystal cells prepared as above were irradiated with light from the backlight was applied thereto at 5 V for about 100 hours. After the irradiation, the voltage holding ratio (VHR), residual DC voltage, and change in the pretilt angle were measured for the respective liquid crystal cells.

VHR was measured under the conditions of 1 V and 70°C. The residual DC voltage was measured at 40°C by Flicker Elimination technology using a DC offset voltage at 1 V. The change in the pretilt angle was calculated by subtracting the pretilt angle before backlight irradiation and energization from the pretilt angle after the irradiation and energization.

Also, a liquid crystal cell which was the same as the sample of the present example, except for including no iniferter in the composition for a liquid crystal layer, was produced as a reference cell to be compared with the above sample. Then, the VHR, residual DC voltage, and change in the tilt angle due to the backlight irradiation and energization were measured for the reference cell in the same ways.

Table 7 shows the results of the VHR (%) after the backlight irradiation on the samples for about 100 hours.

**[Table 7]**

| | 0 mol % | 0.01 mol % | 0.1 mol % | 1 mol % | 2.5 mol % | 5 mol % |
|---|---|---|---|---|---|---|
| Formula (28) | - | 99.1 | 98.8 | 97.6 | 97.1 | 96. 4 |
| No polymerization initiator | 99.2 | - | - | - | - | - |

Table 7 shows that the sample had sufficient reliability at any concentration of the iniferter, and had particularly high reliability in the case that the concentration of the iniferter was 0.01 mol% because, as described above, no extra gas was generated in the polymerization reaction in Example 3 and the radical concentration was low.

The sample containing no iniferter did not show a much decrease in the VHR because the concentration of radicals remaining unreacted was low.

Table 8 shows the results of the residual DC voltage (mV) after the backlight irradiation on the samples for about 100 hours. The value of the residual DC voltage is a value measured after one-hour application of DC voltage.

**[Table 8]**

| | 0 mol % | 0.01 mol % | 0.1 mol % | 1 mol % | 2.5 mol % | 5 mol % |
|---|---|---|---|---|---|---|
| Formula (28) | - | 30 or lower | 60 | 100 | 130 | 170 |
| No polymerization initiator | 30 or lower | - | - | - | - | - |

Table 8 shows that the sample had a residual DC voltage of 100 (mV) or lower at the iniferter concentration of 1 mol% or lower, which led to sufficient reduction of the probability of image sticking, because, as described above, no extra gas was generated in the polymerization reaction in Example 3 and the radical concentration was low.

The sample containing no radical polymerization initiator did not show a much decrease in the residual DC voltage because the concentration of radicals remaining unreacted was low.

Table 9 shows the results of a change (°) in the tilt angle upon backlight irradiation on the samples for about 100 hours while an AC voltage of 5 V was applied.

**[Table 9]**

| | 0 mol % | 0.01 mol % | 0.1 mol % | 1 mol % | 2.5 mol % | 5 mol % |
|---|---|---|---|---|---|---|
| Formula (28) | - | 0.05 | 0.02 | 0.01 | 0.01 | 0.01 |
| No polymerization initiator | 0.3 | - | - | - | - | - |

Table 9 shows that, in comparison between the sample containing an iniferter and the sample containing no iniferter, the one containing no iniferter showed a change in the pretilt angle which was an order of magnitude greater than the one containing an iniferter. The results also show that the function of the iniferter of terminating a polymerization reaction greatly reduced the probability of further polymerization by irradiation of light from the backlight, which effectively support suppression of a change in the pretilt angle.

This is probably because the polymerization proceeded sufficiently and irradiation of light from the backlight did not cause further polymerization in the case that an iniferter was added. Meanwhile, in the case that no iniferter was added, unreacted monomers remained and the polymerization was not terminated; as a result, irradiation of light from the backlight caused further polymerization so that the pretilt angle was changed.

The liquid crystal cell was disassembled after the measurements, and was subjected to determination of the molecular weight distribution of the polymer layer by GPC. The molecular weight distribution of the polymer which was mixed with the iniferter represented by formula (28) to form the polymer layer was 3, and the molecular weight distribution of the polymer which was not mixed with any iniferter to form a polymer layer was 15 or more.

The above results show that the probability of image sticking caused by a change in the pretilt angle can be largely reduced by mixing an iniferter with the monomer in the composition for a liquid crystal layer, and further, the probability of image sticking caused by a residual DC voltage can be reduced by controlling the amount of the iniferter to 1 mol% or lower relative to the polymerizable monomer. The results also show that a decrease in VHR and an increase in the residual DC voltage are more suppressed when the concentration of the iniferter is 0.1 mol% than when the concentration is 1 mol%; and a decrease in VHR and an increase in the residual DC voltage are more suppressed when the concentration of the iniferter is 0.01 mol% than when the concentration is 0.1 mol%.

The present application claims priority to Patent Application No. 2009-092146 filed in Japan on April 6, 2009 and Patent Application No. 2009-209690 filed in Japan on September 10, 2009 under the Paris Convention and provisions of national law in a designated State, the entire contents of which are hereby incorporated by reference.

### EXPLANATION OF SYMBOLS

10: Array substrate
11, 21: Supporting substrate
12, 22: Alignment film
13, 23: PSA layer (polymer layer)
20: Color filter substrate
30: Liquid crystal layer
41: Polymerizable monomer

Further disclosure is defined in the following itemized list:
1. A liquid crystal display device comprising
   a pair of substrates, and
   a liquid crystal layer between the substrates,
   wherein at least one of the substrates comprises an alignment film and a polymer layer on the alignment film, and
   the polymer layer is formed by polymerization of a polymerizable monomer triggered by a polymerization initiator existing at a concentration of 1 mol% or lower relative to the polymerizable monomer.
2. The liquid crystal display device according to item 1,
   wherein the polymer layer is formed by light irradiation,
   the polymerizable monomer is polymerized by light irradiation,
   the polymerization initiator is a radical polymerization initiator, and
   the polymerization is radical polymerization by light irradiation.
3. The liquid crystal display device according to item 2,
   wherein the radical polymerization initiator has a function of terminating the radical polymerization.
4. The liquid crystal display device according to any one of items 1 to 3,
   wherein each of the substrates comrises an electrode, and
   the polymer layer is formed by polymerization of the polymerizable monomer while a voltage not lower than a threshold voltage is applied to the liquid crystal layer through the electrodes.
5. The liquid crystal display device according to any one of items 1 to 4,
   wherein the alignment film contains a material that includes a compound comprising a photoactive functional group.
6. The liquid crystal display device according to any one of items 1 to 5,
   wherein the alignment film is a resin film.
7. The liquid crystal display device according to item 1,
   wherein the molecular weight distribution of the polymer constituting the polymer layer is 8 or less.
8. The liquid crystal display device according to item 7,
   wherein the polymerization initiator is a radical polymerization initiator, and
   the polymerization is radical polymerization.
9. The liquid crystal display device according to item 8,
   wherein the radical polymerization initiator includes a chemical structure represented by formula (1): 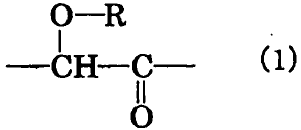 wherein R represents H, CₙH₂ₙ₊₁ or CₙH₂ₙCF₃, and n is an integer of 1 to 18;
   the radical polymerization includes a chemical reaction represented by formula (2): 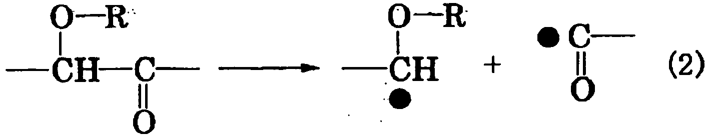 wherein R represents H, CₙH₂ₙ₊₁ or CₙH₂ₙCF₃, and n is an integer of 1 to 18; and
   the chemical reaction is caused by ultraviolet light irradiation to produce radicals that initiate the polymerization.
10. The liquid crystal display device according to item 8 or 9,
   wherein the radical polymerization initiator includes at least one compound selected from the group consisting of
   compounds represented by formulae (3-1) to (3-8): 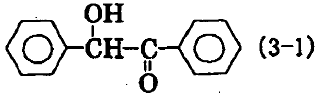 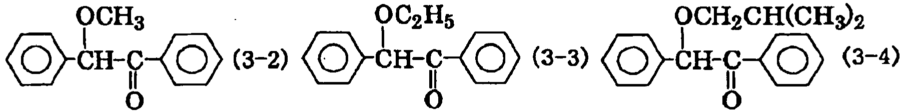 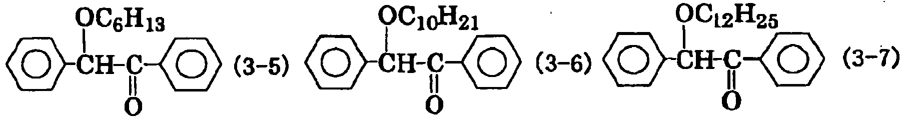 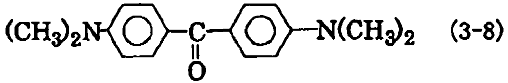 and
   compounds represented by formulae (4-1) to (4-3): 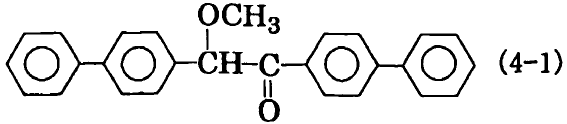 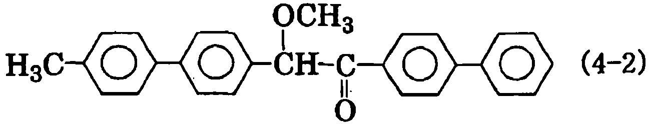 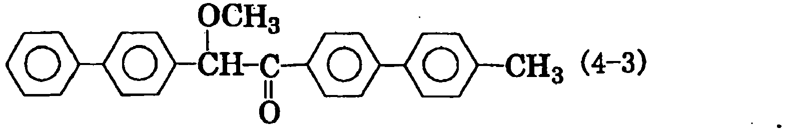
11. The liquid crystal display device according to item 8,
   wherein the radical polymerization initiator includes two compounds, one of the compounds represented by formula (5) : 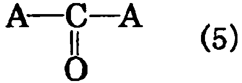 wherein A represents an aromatic compound, and the other one represented by formula (6): 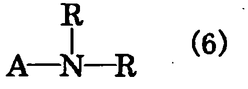 wherein R represents CₙH₂ₙ₊₁, n is an integer of 1 to 18, and A represents an aromatic compound;
   the radical polymerization includes a chemical reaction represented by formula (7): 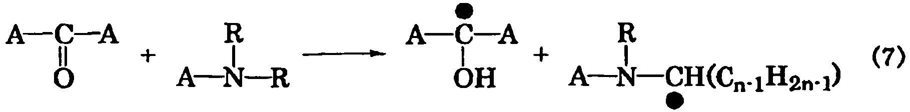 wherein R represents CₙH₂ₙ₊₁, n is an integer of 1 to 18, and A represents an aromatic compound; and
   the chemical reaction is caused by ultraviolet light irradiation to produce radicals that initiate the polymerization.
12. The liquid crystal display device according to item 8 or 11,
   wherein the radical polymerization includes a chemical reaction represented by formula (8): 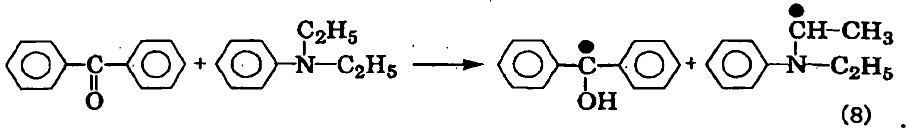
13. The liquid crystal display device according to item 8,
   wherein the radical polymerization initiator has a function of terminating the radical polymerization.
14. The liquid crystal display device according to item 8 or 13,
   wherein the radical polymerization initiator includes a chemical structure represented by formula (9): 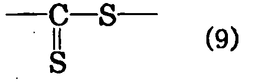
15. The liquid crystal display device according to item 8, 13, or 14,
   wherein the radical polymerization initiator includes at least one compound selected from the group consisting of
   compounds represented by formulae (10-1) to (10-17): 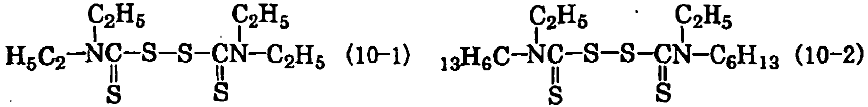 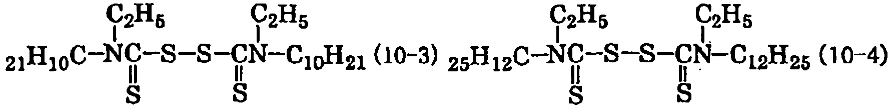 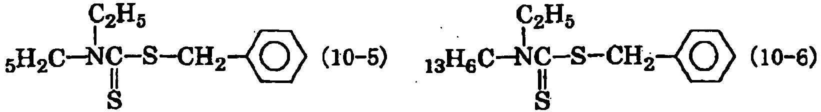 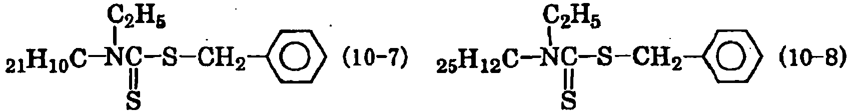 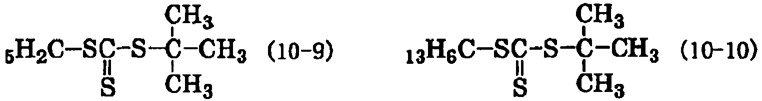 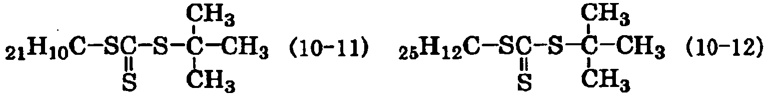 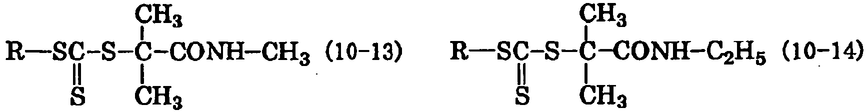 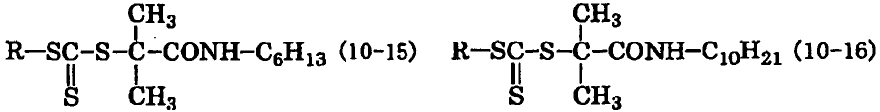 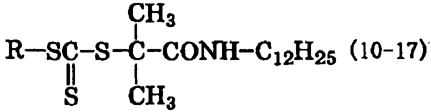 wherein R represents CH₃, C₂H₅, C₆H₁₃, C₁₀H₂₁, or C₁₂H₂₅, and compounds represented by formulae (11-1) to (11-3): 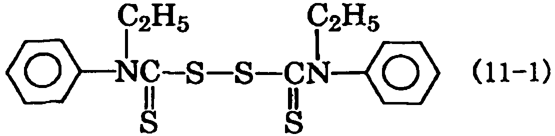 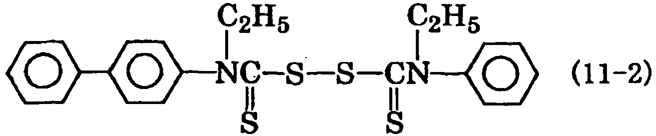 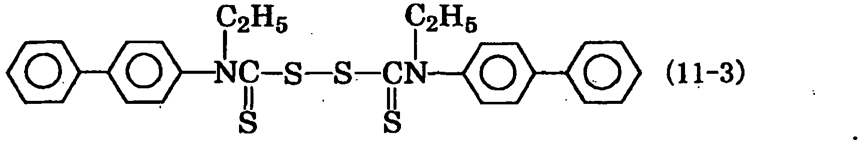
16. The liquid crystal display device according to any one of items 1 to 15,
   wherein the alignment film vertically aligns liquid crystal molecules in the liquid crystal layer while no voltage is applied.
17. The liquid crystal display device according to item 16,
   wherein the alignment film contains a material that includes a compound comprising a photoactive functional group.
18. The liquid crystal display device according to item 17,
   wherein the photoactive functional group is a cinnamate group, chalcone group, tolane group, coumarin group, or azobenzene group.
19. The liquid crystal display device according to any one of items 16 to 18,
   wherein the alignment film comprises a copolymer that contains a monomer unit comprising a side chain containing a photoactive functional group and a monomer unit comprising a side chain free from photoactive functional groups.
20. The liquid crystal display device according to any one of items 17 to 19,
   wherein the alignment film tilts the liquid crystal molecules in the liquid crystal layer in a direction oblique to the normal direction of the alignment film surface while no voltage is applied.
21. The liquid crystal display device according to any one of items 1 to 20, comprising
   a plurality of pixels,
   wherein the liquid crystal layer is divided into regions that are in one-to-one correspondence with the pixels, and
   each of the regions of the liquid crystal layer is divided into a plurality of subregions whose alignment directions of liquid crystal molecules are different from one another.
22. The liquid crystal display device according to item 21,
   wherein the number of the subregions is four.
23. A method for producing a liquid crystal display device comprising a pair of substrates and a liquid crystal layer between the substrates, the method comprising the steps of:
   forming an alignment film on at least one of the substrates; and
   forming a polymer layer by polymerization starting from an initiation reaction triggered by a polymerization initiator, on the alignment film,
   wherein the molecular weight distribution of the polymer constituting the polymer layer is 8 or less.
24. The production method according to item 23, further comprising the step of dissolving a monomer and a polymerization initiator at a concentration of 1 mol% or lower relative to the monomer in a liquid crystal material before the step of forming a polymer layer.
25. The production method according to item 23 or 24, wherein the step of forming a polymer layer comprises forming a polymer layer on a vertical-alignment film by polymerization starting from an initiation reaction triggered by a polymerization initiator while applying a voltage not lower than a threshold voltage to the liquid crystal layer.
26. The production method according to item 23 to 24, further comprising the step of an alignment treatment by irradiating with light the alignment film containing a material that includes a compound comprising a photoactive functional group.
27. The production method according to item 26,
   wherein the photoactive functional group is a cinnamate group, chalcone group, tolane group, coumarin group, or azobenzene group.
28. The production method according to item 26 or 27, wherein the alignment film comprises a copolymer that contains a monomer unit comprising a side chain containing the photoactive functional group and a monomer unit comprising a side chain free from photoactive functional groups.
29. A composition for a polymer layer, comprising
   a polymerizable monomer, and
   a polymerization initiator existing at a concentration of 1 mol% or lower relative to the polymerizable monomer.
30. The composition for a polymer layer according to item 29,
   wherein the polymerizable monomer is polymerized by light irradiation, and
   the polymerization initiator is a radical polymerization initiator.
31. The composition for a polymer layer according to item 29 or 30,
   wherein the polymerization initiator has a function of terminating the polymerization.
32. A composition for a liquid crystal layer, comprising
   the composition for a polymer layer according to any one of items 29 to 31, and
   a liquid crystal material.

## Claims

1. A liquid crystal display device comprising
a pair of substrates (10, 20), and
a liquid crystal layer (30) between the substrates (10, 20),
wherein at least one of the substrates (10, 20) comprises an alignment film (12, 22) and a polymer layer on the alignment film (12, 22), and
the polymer layer is formed by a radical polymerization reaction of a polymerizable monomer and by irradiating the polymerizable monomer with light, the radical polymerization reaction is triggered by a radical polymerization initiator existing at a concentration of 1 mol% or lower relative to the polymerizable monomer **characterized in that**
the radical polymerization initiator has a function of terminating the radical polymerization.

2. The liquid crystal display device according to claim 1.
wherein each of the substrates (10, 20) comrises an electrode, and
the polymer layer is formed by polymerization of the polymerizable monomer while a voltage not lower than a threshold voltage is applied to the liquid crystal layer (30) through the electrodes.

3. The liquid crystal display device according to claim 1 or 2,
wherein the radical polymerization initiator includes a chemical structure represented by formula (9):

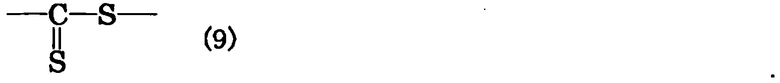

4. The liquid crystal display device according to claim 3,
wherein the radical polymerization initiator includes at least one compound selected from the group consisting of
compounds represented by formulae (10-1) to (10-17): 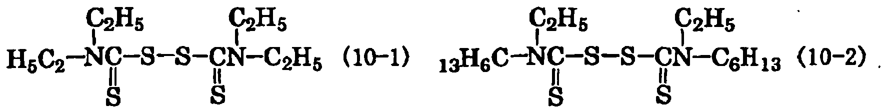 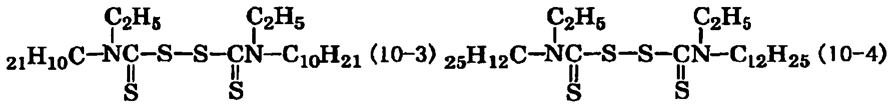 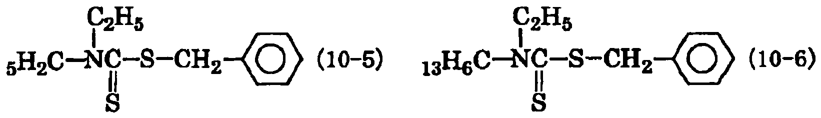 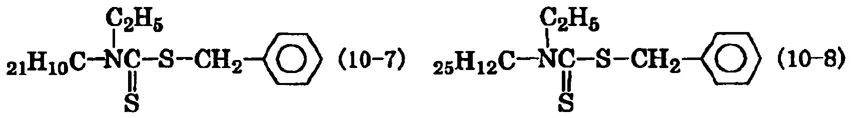 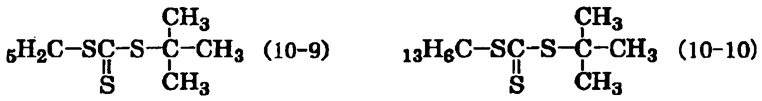 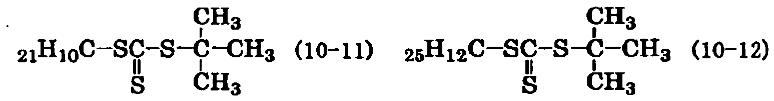 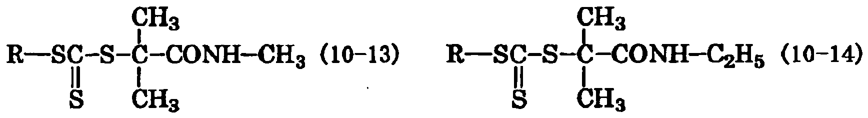 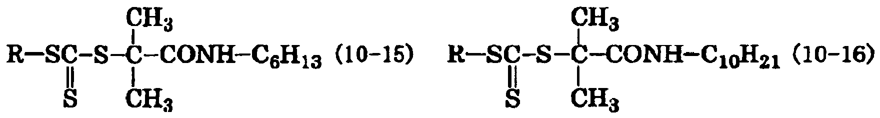 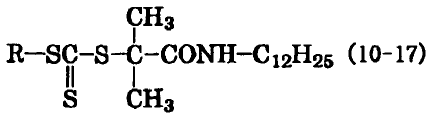 wherein R represents CH₃, C₂H₅, C₆H₁₃, C₁₀H₂₁, or C₁₂H₂₅, and
compounds represented by formulae (11-1) to (11-3):

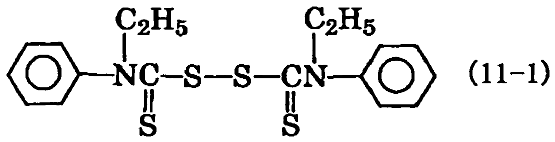

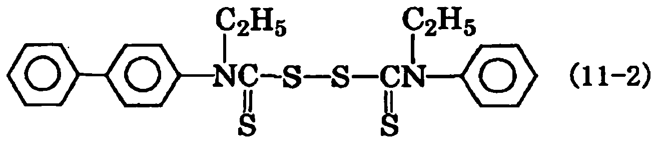

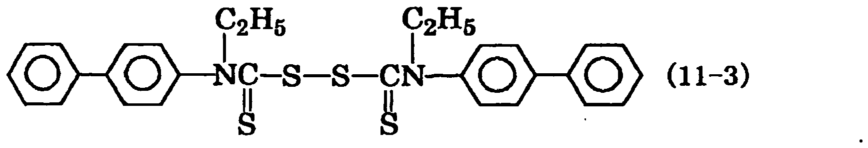

5. The liquid crystal display device according to any one of claims 1 to 4.
wherein the alignment film (12, 22) vertically aligns liquid crystal molecules in the liquid crystal layer (30) while no voltage is applied, and
wherein the alignment film (12, 22) contains a material that includes a compound comprising a photoactive functional group.

6. The liquid crystal display device according to claim 5,
wherein the photoactive functional group is a cinnamate group, chalcone group, tolane group, coumarin group, or azobenzene group.

7. The liquid crystal display device according to claim 5 or 6,
wherein the alignment film (12, 22) tilts the liquid crystal molecules in the liquid crystal layer (30) in a direction oblique to the normal direction of the alignment film (12, 22) surface while no voltage is applied.

8. A composition for a polymer layer, comprising
a monomer being polymerizable by light irradiation,
a radical polymerization initiator,
wherein the radical polymerization initiator has a function of terminating the polymerization, **characterised in that** the radical polymerization initiator exists at a concentration of 1 mol% or lower relative to the polymerizable monomer and **in that** the composition further comprises a liquid crystal material.

## Patentansprüche

1. Flüssigkristallanzeigenvorrichtung, umfassend
ein Substratpaar (10, 20) und
eine Flüssigkristallschicht (30) zwischen den Substraten (10, 20), wobei mindestens eines der Substrate (10, 20) einen Alignmentfim (12, 22) und eine Polymerschicht auf dem Alignmentfilm (12, 22) umfasst, und
die Polymerschicht durch eine Radikalpolymerisationsreaktion eines polymerisierbaren Monomers und durch Bestrahlen des polymerisierbaren Monomers mit Licht hergestellt ist, wobei die Radikalpolymerisationsreaktion durch einen Radikalpolymerisationsinitiator ausgelöst wird, der in einer Konzentration von 1 Mol% oder weniger vorliegt, bezogen auf das polymerisierbare Monomer, **dadurch gekennzeichnet, dass**
der Radikalpolymerisationsinitiator eine Funktion zur Beendigung der Radikalpolymerisation aufweist.

2. Flüssigkristallanzeigenvorrichtung nach Anspruch 1,
wobei jedes der Substrate (10, 20) eine Elektrode umfasst und
die Polymerschicht durch Polymerisation des polymerisierbaren Monomers hergestellt ist, während eine Spannung, die nicht geringer als eine Grenzspannung ist, an die Flüssigkristallschicht (30) über die Elektroden angelegt ist.

3. Flüssigkristallanzeigenvorrichtung nach Anspruch 1 oder 2,
wobei der Radikalpolymerisationsinitiator eine chemische Struktur umfasst, die durch die Formel (9) wiedergegeben ist:

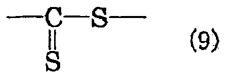

4. Flüssigkristallanzeigenvorrichtung nach Anspruch 3,
wobei der Radikalpolymerisationsinitiator mindestens eine Verbindung umfasst, ausgewählt aus der Gruppe bestehend aus:
Verbindungen, die durch die Formeln (10-1) bis (10-17) wiedergegeben sind; 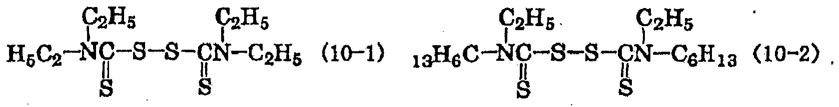 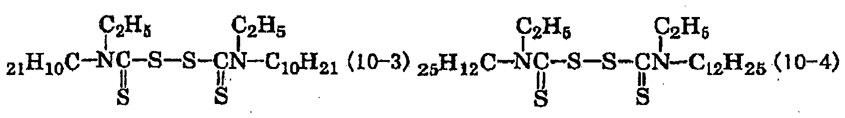 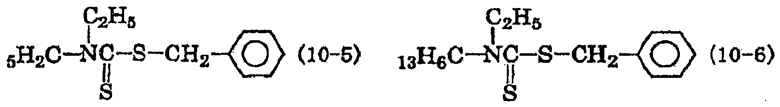 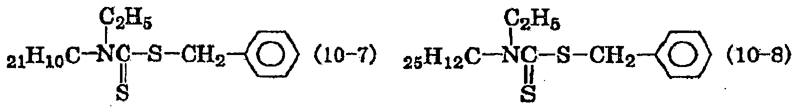 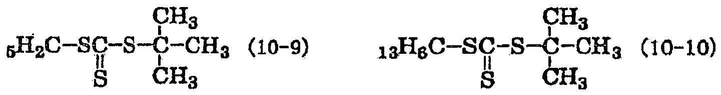 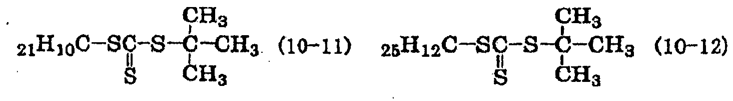 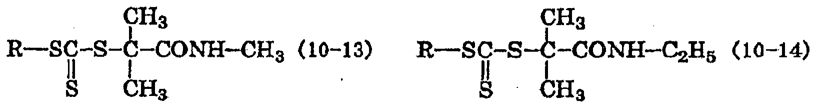 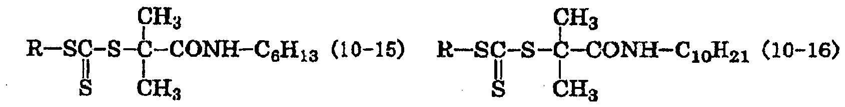 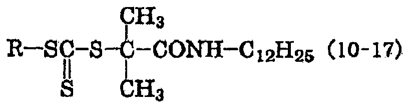 wobei R für CH₃, C₂H₅, C₆H₁₃, C₁₀H₂₁ oder C₁₂H₂₅ steht, und Verbindungen, die durch Formeln (11-1) bis (11-3) wiedergegeben sind:

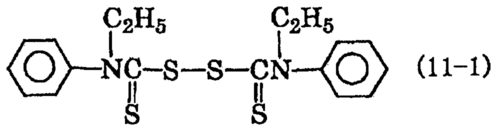

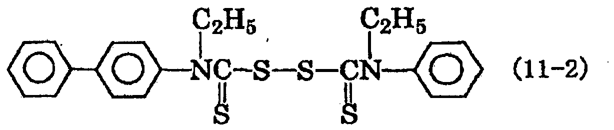

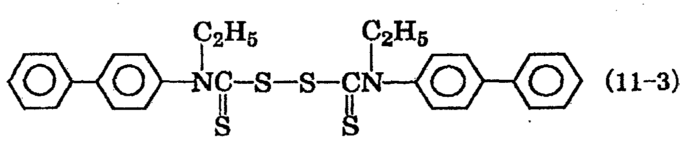

5. Flüssigkristallanzeigenvorrichtung nach einem der Ansprüche 1 bis 4,
wobei der Alignmentfilm (12, 22) Flüssigkristallmoleküle in der Flüssigkristallschicht (30) vertikal ausrichtet, während keine Spannung angelegt ist und
wobei der Alignmentfilm (12, 22) ein Material enthält, das eine Verbindung enthält, die eine fotoaktive funktionelle Gruppe umfasst.

6. Flüssigkristallanzeigenvorrichtung nach Anspruch 5,
wobei die fotoaktive funktionelle Gruppe eine Cinnamat-, Chalcon-, Tolan-, Cumarin- oder Azobenzol-Gruppe ist.

7. Flüssigkristallanzeigenvorrichtung nach Anspruch 5 oder 6,
wobei der Alignmentfilm (12, 22) die Flüssigkristallmoleküle in der Flüssigkristallschicht (30) in eine Richtung schräg zur normalen Richtung der Alignmentfilm-(12, 22-)Oberfläche neigt, während keine Spannung angelegt ist.

8. Zusammensetzung für eine Polymerschicht, umfassend ein Monomer, das durch Lichtbestrahlung polymerisierbar ist,
einen Radikalpolymerisationsinitiator,
wobei der Radikalpolymerisationsinitiator eine Funktion zur Beendigung der Polymerisation aufweist, **dadurch gekennzeichnet, dass**
der Radikalpolymerisationsinitiator in einer Konzentration von 1 Mol% oder weniger, bezogen auf das polymerisierbare Monomer, vorliegt und dadurch, dass die Zusammensetzung weiterhin ein Flüssigkristallmaterial aufweist.

## Revendications

1. Dispositif d'affichage à cristaux liquides comprenant
une paire de substrats (10, 20), et
une couche de cristaux liquides (30) entre les substrats (10, 20),
dans lequel au moins l'un des substrats (10, 20) comprend un film d'alignement (12, 22) et une couche de polymère sur le film d'alignement (12, 22), et
la couche de polymère est formée par une réaction de polymérisation radicalaire d'un monomère polymérisable et par irradiation du monomère polymérisable avec une lumière, la réaction de polymérisation radicalaire étant déclenchée par un amorceur de polymérisation radicalaire existant à une concentration de 1 % en moles ou moins par rapport au monomère polymérisable,
**caractérisé en ce que** l'amorceur de polymérisation radicalaire a pour fonction de terminer la polymérisation radicalaire.

2. Dispositif d'affichage à cristaux liquides selon la revendication 1, dans lequel chacun des substrats (10, 20) comprend une électrode, et la couche de polymère est formée par polymérisation du monomère polymérisable pendant qu'une tension non inférieure à une tension de seuil est appliquée à la couche de cristaux liquides (30) par l'intermédiaire des électrodes.

3. Dispositif d'affichage à cristaux liquides selon la revendication 1 ou 2, dans lequel l'amorceur de polymérisation radicalaire comprend une structure chimique représentée par la formule (9) :

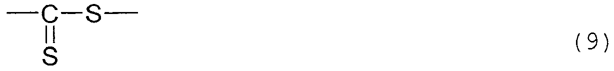

4. Dispositif d'affichage à cristaux liquides selon la revendication 3, dans lequel l'amorceur de polymérisation radicalaire comprend au moins un composé choisi dans l'ensemble constitué par les composés représentés par les formules (10-1) à (10-17) : 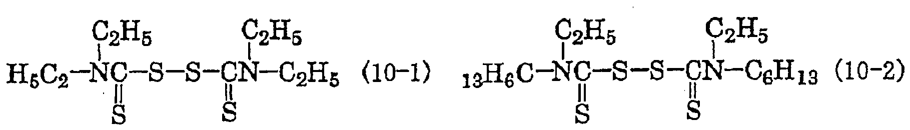 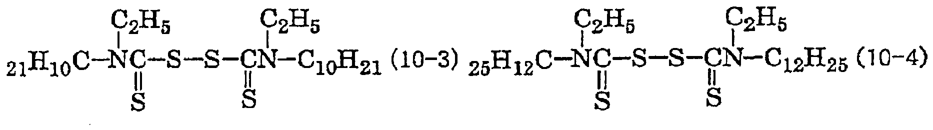 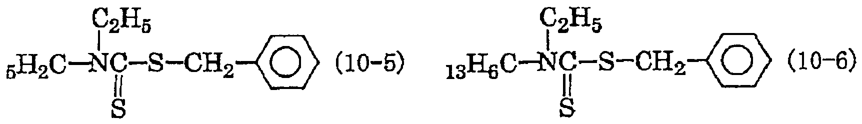 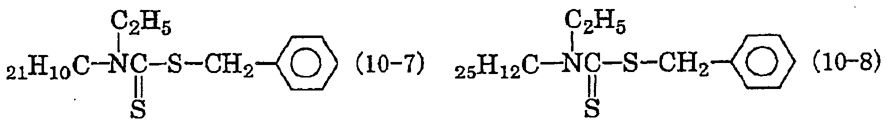 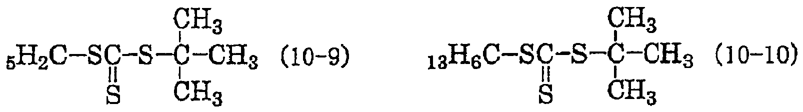 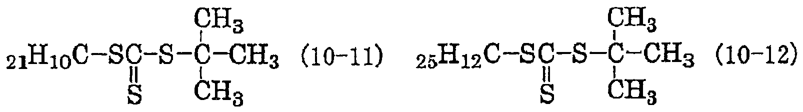 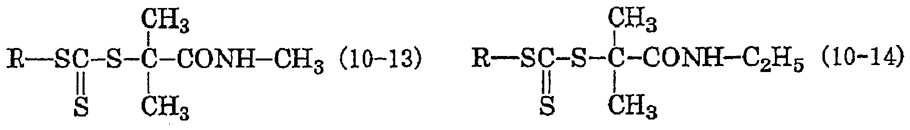 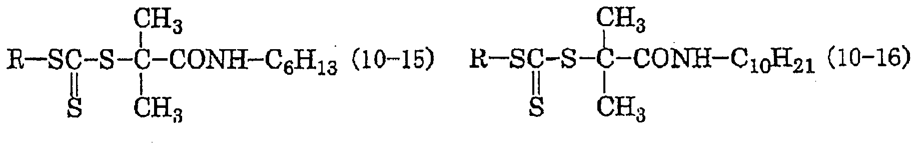 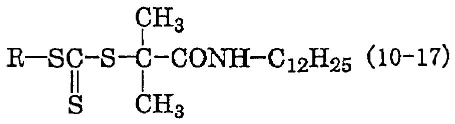 dans lesquelles R représente CH₃, C₂H₅, C₆H₁₃, C₁₀H₂₁, ou C₁₂H₂₅,
et les composés représentés par les formules (11-1) à (11-3) :

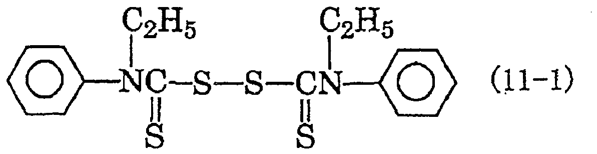

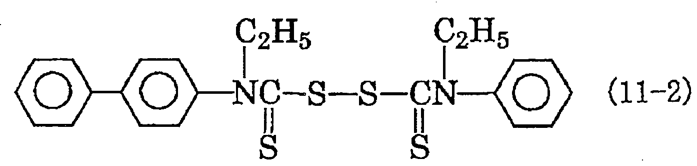

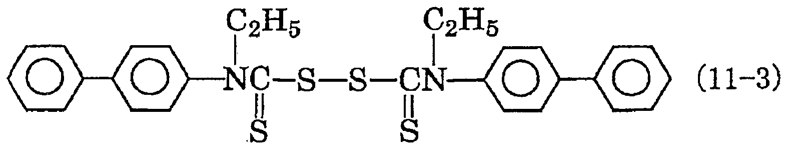

5. Dispositif d'affichage à cristaux liquides selon l'une quelconque des revendications 1 à 4, dans lequel le film d'alignement (12, 22) aligne verticalement les molécules de cristaux liquides dans la couche de cristaux liquides (30) pendant qu'aucune tension n'est appliquée, et dans lequel le film d'alignement (12, 22) contient un matériau qui comprend un composé comprenant un groupe fonctionnel photoactif.

6. Dispositif d'affichage à cristaux liquides selon la revendication 5, dans lequel le groupe fonctionnel photoactif est un groupe cinnamate, un groupe chalcone, un groupe tolane, un groupe coumarine, ou un groupe azobenzène.

7. Dispositif d'affichage à cristaux liquides selon la revendication 5 ou 6, dans lequel le film d'alignement (12, 22) incline les molécules de cristaux liquides dans la couche de cristaux liquides (30) dans une direction oblique à la direction normale de la surface du film d'alignement (12, 22) pendant qu'aucune tension n'est appliquée.

8. Composition pour une couche de polymère, comprenant
un monomère qui est polymérisable par irradiation de lumière,
un amorceur de polymérisation radicalaire,
dans laquelle l'amorceur de polymérisation radicalaire a pour fonction de terminer la polymérisation,
**caractérisée en ce que** l'amorceur de polymérisation radicalaire existe à une concentration de 1 % en moles ou moins par rapport au monomère polymérisable, et **en ce que** la composition comprend en outre un matériau cristal liquide.
